# EUROPEAN PATENT APPLICATION

(11) **EP 1 770 621 A1**
(43) Date of publication of application: **04.04.2007**
(21) Application number: 06019568.2
(22) Date of filing: 19.09.2006
(51) Int. Cl.: G06Q 10/00

(54) **Progress management system**

(30) Priority: 27.09.2005 JP 2005279093
(71) Applicant: HITACHI SOFTWARE ENGINEERING CO., LTD., Yokohama-shi, Kanagawa 230-0045 (JP)
(72) Inventor: Yomogida, Yoshikazu, c/o Hitachi Software Eng. Co., Tokyo 140-0002 (JP)
(74) Representative: Liesegang, Roland

(57) **Abstract**

A progress management system employing a progress map that enables the visual monitoring of the progress status of an overall operation, the amount of each task, progress status or the like for each person in charge, in addition to the status of progress of each task, on a single screen. A progress management screen 2100 includes a progress map display portion 2110 and a person-in-charge list display portion 2120. The progress map display portion 2110, based on a Gantt chart, shows a progress map consisting of task units 2111 indicating individual tasks and a connection line connecting adjacent task units 2111 in a graph structure. On a task unit 2111, persons in charge of associated tasks, progress ratio 2112, and a task unit value 2114 based on the progress ratio 2112 and value 2113 are displayed. In the person-in-charge list display portion 2120, a list of persons in charge with associated task units and a sum of task unit values for each person in charge are displayed as a person-in-charge result value 2121.

## Description

### BACKGROUND OF THE INVENTION

### Field of the Invention

The invention relates to a project progress management system, and particularly to a system for assigning tasks to a plurality of persons in charge, carrying out progress management of tasks of each person in charge, evaluating each person in charge, and changing task assignments.

### Background Art

Generally, in project management for software development or the like, a progress manager divides an operation into individual tasks based on the type of work or process steps. The manager then assigns the thus divided individual tasks to different persons in charge, and lays out an operation plan such that all of the tasks can be completed by the due date. The progress manager conducts progress management in accordance with the operation plan.

During such progress management, the progress status of individual tasks is monitored. If the progress of a particular task is lagging behind, the person in charge of the task may be replaced with a person in charge of another task that is ahead of schedule, or the task of the person in charge of the advancing task may be terminated so that he or she can help with the lagging task. Thus, it is the progress manager's job to optimize the progress status of the entire operation.

As a tool for facilitating such progress management, a chart referred to as the Gantt chart is generally used.

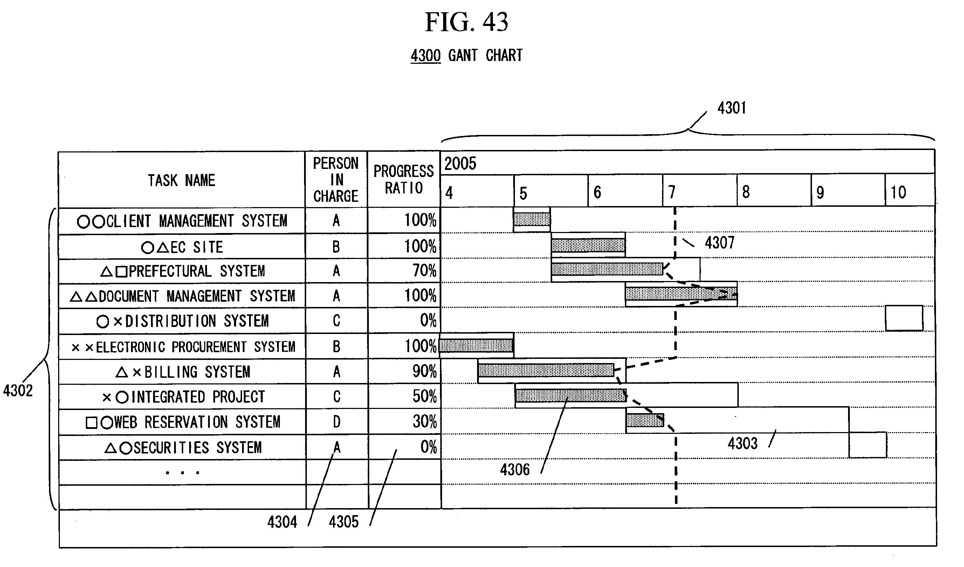

Fig. 43 shows an example of the Gantt chart that is conventionally used.

A Gantt chart 4300, of which the horizontal axis 4301 shows time and the vertical axis 4302 shows individual tasks, shows bars 4303 indicating the period of each task. The left end of the bars 4303 indicates the task start time, and the right end indicates the task completion time.

Each task on the Gantt chart 4300 is associated with the name of a person in charge 4304, and with a task progress ratio 4305 based on a report from the person in charge. Further, against 100 of completion of a task, progress bars 4306 are created to indicate the degree of progress of the task in terms the progress ratio, which indicates the proportion of the task carried out. Such progress bars 4306 are displayed superimposed on the bars 4303, so that the progress status of each task can be managed.

In a conventional progress management system, guidance for a subsequent step is displayed based on the progress status of each task indicating the completion or non-completion of the task, and on pattern information including guidance of the subsequent step based on the stage of progress. Based on the input of information regarding the subsequent step, the progress status is updated so as to indicate the completion of the particular step (see Patent Document 1, for example).

Patent Document 1: JP Patent Publication (Kokai) No. 2000-250973 A

### SUMMARY OF THE INVENTION

In the task progress management method that utilizes the Gantt chart, while the progress status of individual tasks can be easily grasped, it has been difficult to visualize the progress status of the entire operation. Further, because a plurality of persons in charge are assigned arbitrarily to the tasks laid out on the Gantt chart, it has been difficult to ascertain the amount of work, the progress status, or the like of each person in charge.

For example, in a conventional Gantt chart 4300 as shown in Fig. 43, the progress of the entire operation is indicated by displaying a progress line (dash line) 4307. The lightning line 4307, which connects progress status values, shows whether the progress status of each task is lagging or advancing relative to the current date. If the progress is ahead of schedule, the line extends to the right, while it extends to the left if the progress is behind schedule. However, even when the lightning line 4307 is used, it is still difficult to grasp the progress status or the amount of work for each person in charge.

The visual monitoring of the progress status of the entire operation or the amount of work for each person in charge is not considered in Patent Document 1, either.

It is therefore an object of the invention to solve the aforementioned problems and provide a progress management system that employs a progress map for allowing the visual monitoring of the progress status of the entire operation, and the amount of work and the progress status for each person in charge, as well as the progress status of each task, on a single screen.

In order to achieve the aforementioned object, the invention provides a progress management system comprising:
a plurality of person-in-charge's terminals; and
a manager's terminal connected to the person-in-charge's terminals via a network, wherein the manager's terminal, based on progress information about tasks received from the person-in-charge's terminals, generating and displaying progress management information about a project,
the manager's terminal comprising:
   progress map generating means for generating, based on task attribute information that is arbitrarily entered about progress management of each task, progress management information, and associating it with each task unit, the progress map generating means also generating a progress map that shows the tasks in the form of a graph structural chart in which a task unit and adjacent task units are connected by a connection line;
   person-in-charge assigning means for displaying person-in-charge identifying information, which identifies a person in charge who is arbitrarily assigned to each task unit on the progress map, on each task unit; and
   progress information display means for receiving progress information that is registered in the person-in-charge's terminals for each task unit, and displaying the degree of progress of a task based on the progress information in association with each task unit on the progress map,
   each person-in-charge's terminal comprising progress map display means for receiving the progress map, on which the person-in-charge identifying information and the degree of progress of a task are shown, and displaying it on the person-in-charge's terminal.

The manager's terminal further comprises:
person-in-charge region setting means for setting, based on the person-in-charge identifying information, a person-in-charge region boundary that divides regions including the task units assigned to the individual persons in charge, and displaying a region boundary line that represents the person-in-charge region boundary on the progress map.

The person-in-charge's terminal further comprises progress information registration means for accepting the registration of progress information about a task unit that is assigned to each person in charge on the progress map.

The progress map generating means further comprises means for arranging the individual task units on the progress map in accordance with one or a plurality of reference positions that are designated in advance and based on priority set for each task unit.

The progress map generating means further comprises means for setting the priority based on the task attribute information.

The progress map generating means further comprises a means for displaying a task list input screen for accepting the entry of task attribute information for each task, and generating the progress management information based on the task attribute information entered on the task list input screen.

The progress map generating means displays an input screen in the Gantt chart format as the task list input screen for accepting the setting of a planned task period for each task.

The task information includes value that is set for each task, wherein the progress information display means calculates, for each task unit on the progress map, a result value for each task based on the degree of progress and the value, and displays the result value on a corresponding task unit.

The progress information display means further comprises a means for tallying the result value of each task of each person in charge to whom the task is assigned, and displaying the result of tallying.

The progress management system further comprises:
means for accepting a transfer setting from a person-in-charge's terminal indicated by person-in-charge identifying information set in a task unit on the progress map;
means for accepting an acquisition application from a person-in-charge's terminal of a person in charge indicated by the person-in-charge identifying information that is set in a task unit adjacent, across the person-in-charge region boundary, to a task unit that is set as a transfer object;
means for accepting an acquisition approval setting from the manager's terminal in response to the acquisition application, changing the setting of the person in charge assigned to the task unit and the person-in-charge region boundary, and displaying the result of the change on the progress map.

The progress management system further comprises means for determining, concerning the task unit of each person in charge on the progress map, whether or not a predetermined arrangement change condition is met, and changing the arrangement of the task unit for each person-in-charge region if the arrangement change condition is met.

Each person-in-charge's terminal comprises means for setting referencing right for referencing task attribe information about a task unit assigned to a person in charge other than the person in charge of the person-in-charge's terminal.

The progress information display means further comprises means for setting a display area of a task unit on the progress map in accordance with value, priority, progress degree, or task unit value.

Thus, in accordance with the invention, an overall operation that is subject to project management is displayed in association with a graph structural chart. In this way, the manager or the like is allowed to easily monitor the overall progress status and the progress status and the amount of task or the like for each person in charge.

Further, because individual task units are arranged sequentially from the center of the progress map based on the priority set for each task, the manager or the like is allowed to easily monitor the progress status of tasks with higher priority. In this case, because the priority is set in accordance with the planned task start date, progress management can be performed in accordance with the planned task start date, as in a case where a Gantt chart is utilized.

Further, because progress management information is generated based on the task information entered on a Gantt chart editing screen, the manager can utilize the system of the invention simply by performing an operation substantially similar to the conventional Gantt chart creating operation.

Further, because the result quantity of each task is calculated based on the value set for each task and the progress status of each task, the result can be easily monitored with reference to the difficulty or the like of each task. In this case, by calculating the sum of the results for each person in charge, the result quantity for each person in charge can be more easily monitored.

Further, because a transfer setting and an acquisition application for a task unit are accepted and then the person in charge assigned to the task unit is changed upon approval of the acquisition application, a person in charge of a task can be easily changed based on the transfer setting and the acquisition application from the person in charge. In addition, changes in the amount of task, the result quantity, or the like of each person in charge as a result of the change of the person in charge can be easily monitored.

Further, because the arrangement change of a task unit associated with progress management information is carried out in accordance with a predetermined arrangement change condition, progress management can be appropriately carried out based on the progress status or the like of the task, and task transfer and acquisition can be appropriately made.

Further, because a referencing right to detailed task information associated with each task unit is set, task information can be referenced by each person in charge within a range necessary for the registration of progress information and the transfer and acquisition of a task.

Further, because the display area of each task unit is set depending on value, priority, degree of progress, or task unit value, each item can be more easily visually monitored.

### BRIEF DESCRIPTION OF THE DRAWINGS

Fig. 1 shows a block diagram illustrating the outline of a progress management system according to an embodiment of the invention.
Fig. 2 shows an example of the data structure of progress management information.
Fig. 3 shows an example of the data structure of progress map information.
Fig. 4 shows an example of the data structure of person-in-charge information.
Fig. 5 shows an example of the data structure of task acquisition application information.
Fig. 6 shows a flowchart of an overall process performed by a progress management system according to an embodiment of the invention.
Fig. 7 shows an example of the screen configuration of a Gantt chart editing screen.
Fig. 8 shows a flowchart of the sequence of a progress management information generating process.
Fig. 9 shows a flowchart of a priority calculation process sequence.
Fig. 10 shows an example of the screen configuration of a progress map generating screen.
Fig. 11 shows a progress map size determining process sequence.
Fig. 12 shows an example of a progress map.
Fig. 13 shows a flowchart of a progress map generating process sequence.
Fig. 14 shows the relationship between coordinates and distance on the progress map.
Fig. 15 shows a flowchart of a distance calculation process sequence.
Fig. 16 shows an example of the screen configuration of a progress management screen.
Fig. 17 shows a flowchart of a process for associating task units with tasks.
Fig. 18 shows an example of a progress management screen in which task units are associated with persons in charge.
Fig. 19 shows a flowchart of a person-in-charge assigning process sequence.
Fig. 20 shows a flowchart of a person-in-charge region boundary setting process sequence.
Fig. 21 shows an example of the progress management screen in which progress information is registered.
Fig. 22 shows a flowchart of a progress information registering process sequence.
Fig. 23 shows a flowchart of a result value calculation process sequence.
Fig. 24 shows an example of the progress management screen in which a task transfer request has been issued.
Fig. 25 shows a flowchart of a transfer request accepting process sequence.
Fig. 26 shows an example of the progress management screen when a task acquisition application has been made.
Fig. 27 shows an example of the progress management screen in an approval-waiting state.
Fig. 28 shows a flowchart of a task acquisition application accepting process sequence.
Fig. 29 shows an example of the configuration of a task acquisition approval screen.
Fig. 30 shows an example of the progress management screen in which "Approve" is selected.
Fig. 31 shows an example of the progress management screen in which "Acquire another task unit" is selected.
Fig. 32 shows a flowchart of a task acquisition approval process sequence.
Fig. 33 shows an example of the progress management screen in which the progress ratio of all of the task units positioned on the person-in-charge region boundary became 100%, as an example of a rearranging condition.
Fig. 34 shows a flowchart of a rearranging condition (progress ratio) determination process sequence.
Fig. 35 shows, as an example of the rearranging condition, an example of the progress management screen in which a transfer request has been made for a task unit that is not positioned on the person-in-charge region boundary.
Fig. 36 shows a flowchart of a rearranging condition (transfer request) determination process sequence.
Fig. 37 shows an example of the progress management screen as a result of performing a re-arranging process on the progress map shown on the progress management screen of Fig. 33.
Fig. 38 shows a flowchart of a task unit re-arranging process sequence.
Fig. 39 shows an example of the progress management screen on which the value of each task is represented by the area of the task unit.
Fig. 40 shows an example of the progress management screen on which the priority of each task is represented by the area of the task unit.
Fig. 41 shows an example of the progress management screen on which the task unit progress ratio is represented by the area of the task unit.
Fig. 42 shows an example of the progress management screen on which the task unit value is represented by the area of the task unit.
Fig. 43 shows an example of a conventional Gantt chart.

### DESCRIPTION OF THE PREFERRED EMBODIMENTS OF THE INVENTION

In the following, a progress management system according to an embodiment of the invention will be described with reference to the drawings.

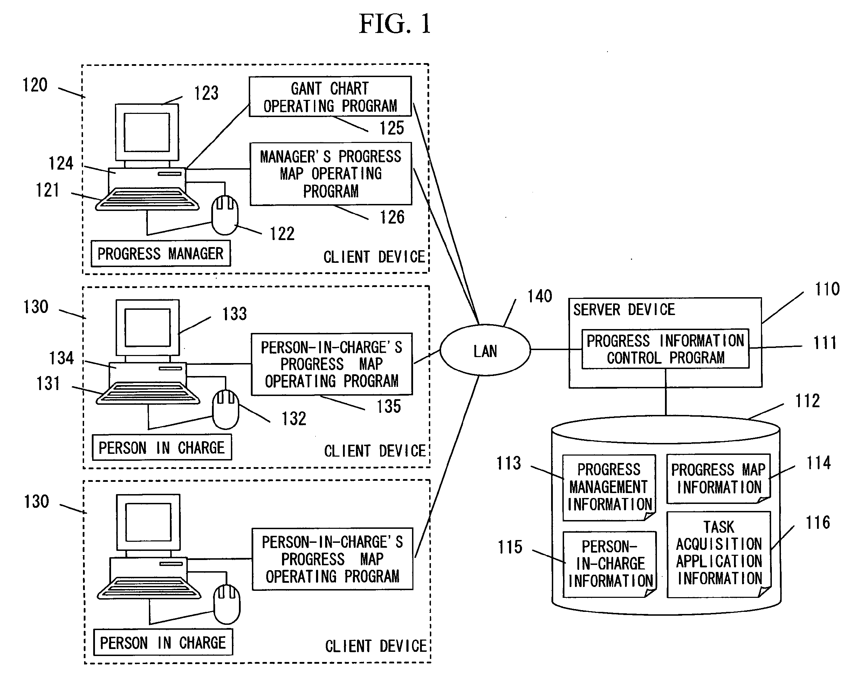

Fig. 1 shows a block diagram of the progress management system according to the present embodiment.

In the progress management system of the illustrated embodiment, a server device 110, a project progress manager's client device 120, and client devices 130 for a plurality of persons in charge are connected via a LAN (Local Area Network) 140. In the present example, two client devices 130 for persons in charge are provided. The number of the person-in-charge's client devices, however, corresponds to the number of the persons in charge and is not limited to two.

The server device 110 includes a progress information control program 111 and a memory device 112. The memory device 112 stores progress management information 113, progress map information 114, person-in-charge information 115, and task acquisition application information 116. The progress management information 113, progress map information 114, person-in-charge information 115, and task acquisition application information 116 are managed using individual progress maps.

The progress manager's client device 120 includes a computer 124 having a keyboard 121 and mouse 122 as input devices, as well as a display device 123. The computer includes a Gantt chart operating program 125 and a manager's progress map operating program 126 as progress management means.

The person-in-charge's client device 130 includes a computer 134 having keyboard 131 and mouse 132 as input devices, and a display device 133. The computer 134 includes a person-in-charge's progress map operating program 135 as a progress information registration means.

The progress information control program 111, in response to a request from the Gantt chart operating program 125, the manager's progress map operating program 126, or the person-in-charge's progress map operating program 135, reads the individual items of information stored in the memory device 112 and sends them to the requesting program 125, 126, or 135. If there is a change in the information in the individual requesting program 125, 126, or 135, the program 125, 126, or 135 sends the altered information to the progress information control program 111. Based on the thus transmitted information, the progress information control program 111 updates the information within the memory device 112.

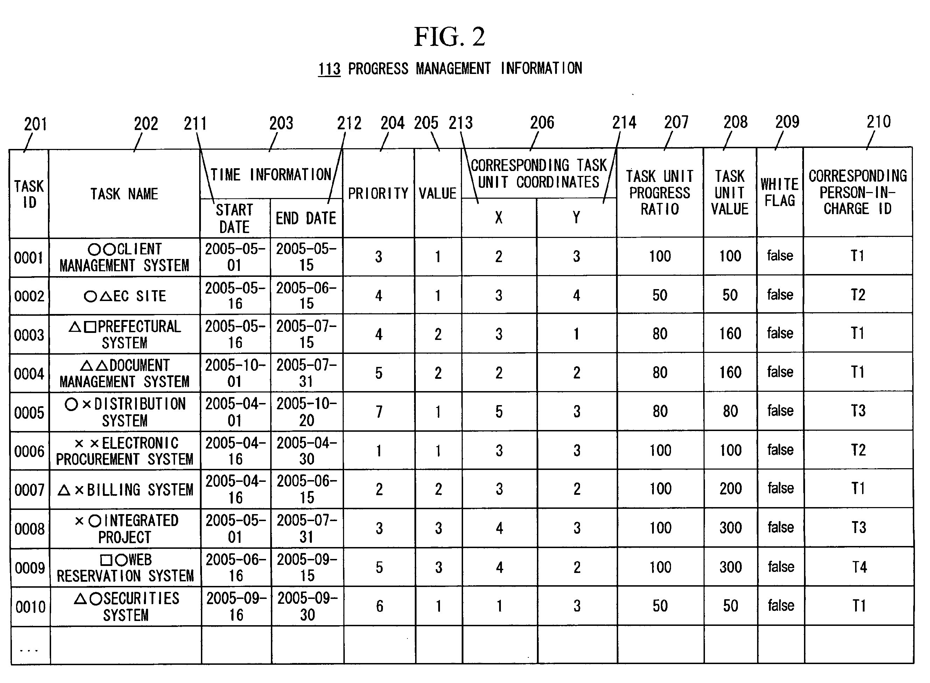

Fig. 2 shows an example of data structure of the progress management information 113 in the memory device 112.

Each line of information shown in Fig. 2 corresponds to the individual tasks, which are a breakdown of a project in units of tasks.

The progress management information 113 contains task attribute information such as task ID 201, task name 202, time information 203, priority 204, and value 205, and data items such as corresponding task unit coordinates 206, task unit progress ratio 207, task unit value 208, white flag 209, and corresponding person-in-charge ID 210.

The task ID 201 is an identifier that uniquely identifies each line of progress management information managed in each progress map.

The task name 202 is a designation arbitrarily given to each task.

The time information 203 consists of start date 211 and end date 212. The start date 211 is the date of start of each task. The end date 212 is the date on which the task ends.

The priority 204 is a numerical value indicating the priority of each task relative to the entire operation.

The value 205 is a numerical value indicating the value arbitrarily allocated to each task.

The corresponding task unit coordinates 206 consist of an X coordinate 213 and a Y coordinate 214. They hold the same values as those of the task unit coordinates in the progress map information 114, which will be described later, thereby associating the progress management information 113 with the progress map information 114.

The task unit progress ratio 207 is a numerical value indicating the progress of each task. It is transmitted from the person-in-charge's progress map operating program 134 and is described in percentages.

The task unit value 208 is a numerical value obtained by multiplying the value 205 by the task unit progress ratio 207, indicating the result of each task.

The white flag 209 is a Boolean value indicating whether or not a person in charge of a task is transferring the task to another person in charge. When the value is "true," this indicates that the task is being transferred to another person in charge.

The corresponding person-in-charge ID 210 holds the same numerical value as that of the person-in-charge ID of the person-in-charge information 115, which will be described later, thereby associating the progress management information 113 with the person-in-charge information 115.

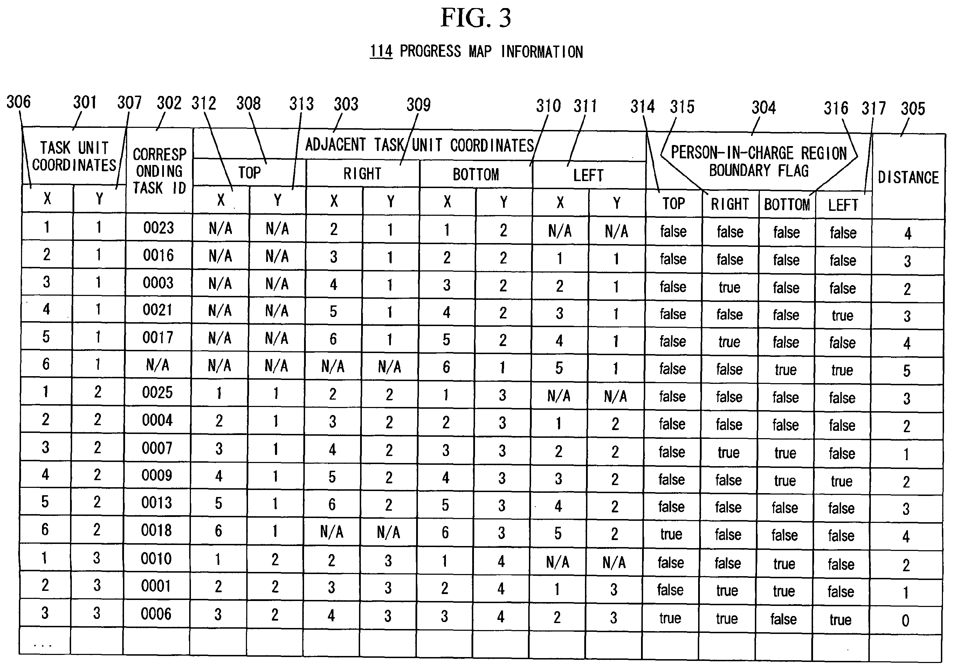

Fig. 3 shows an example of data structure of the progress map information 114 in the memory device 112.

Each line of information shown in Fig. 3 corresponds to each task unit on the progress map, as will be described later.

The progress map information 114 includes individual data items including task unit coordinates 301, corresponding task ID 302, adjacent task unit coordinates 303, person-in-charge region boundary flag 304, and distance 305.

The task unit coordinates 301 are comprised of an X coordinate 306 and a Y coordinate 307. They show the coordinate values of X coordinates and Y coordinates on the progress map to be described later, thereby associating each line of the progress map information 114 with the task units on the progress map.

The corresponding task ID 302 carries the same value as the task ID 201 so as to associate the progress map information 114 with the progress management information 113. Thus, the task unit coordinates 301 are used to associate the task units on the progress map with the progress map information 114, and the corresponding task ID 302 is used to associate the progress map information 114 with the progress management information 113. In this way, the task units and the progress management information 113, or, in other words, the task units and the tasks, are associated. When the corresponding task ID 302 has a character string "N/A," this shows that no corresponding task exists, namely, that the task unit is a vacant task unit that does not have a corresponding task.

The adjacent task unit coordinates 303 are comprised of top 308, right 309, bottom 310, and left 311, each of which consists of an X coordinate 312 and a Y coordinate 313.

The top 308, right 309, bottom 310, and left 311 of the adjacent task unit coordinates 303 each indicate the task unit coordinates 301 of adjacent task units in the top direction, right direction, bottom direction, and left direction of a task unit associated with each line of the progress map information 114. Thus, the progress map information 114 for a corresponding task unit can be referenced. When a value "N/A" is stored in the X coordinate and the Y coordinate of the adjacent task unit coordinates 303, this indicates that there is no adjacent task unit in the particular direction. Namely, the corresponding task unit is positioned at the end of the progress map.

The person-in-charge region boundary flag 304 is comprised of top 314, right 315, bottom 316, and left 317. It denotes a Boolean value indicating whether or not a person-in-charge region boundary, which will be described later, exists between a given task unit and an adjacent task unit in each direction. Namely, it denotes whether or not the person in charge of the task of a task unit corresponding to each line of the progress map information 114 is the same as the person in charge of the task of an adjacent task unit. When the value is "true," this indicates that a person-in-charge region boundary exists. When the value is "false," this indicates that there is no person-in-charge region boundary.

The distance 305 is an integer number indicating the distance between a task unit corresponding to each line of the progress map information 114 and a reference task unit (reference position coordinates) that is arbitrarily set on the progress map. In the present case, the greater the value of the distance 305 is, the greater the distance from the reference task unit becomes. The "reference task unit" herein refers to a task unit (task unit with which a task with the highest priority is associated) that is used as a reference when associating each task with each task unit based on priority. In the following description, an example is described in which a task unit located at the center of the progress map is set as the reference task unit.

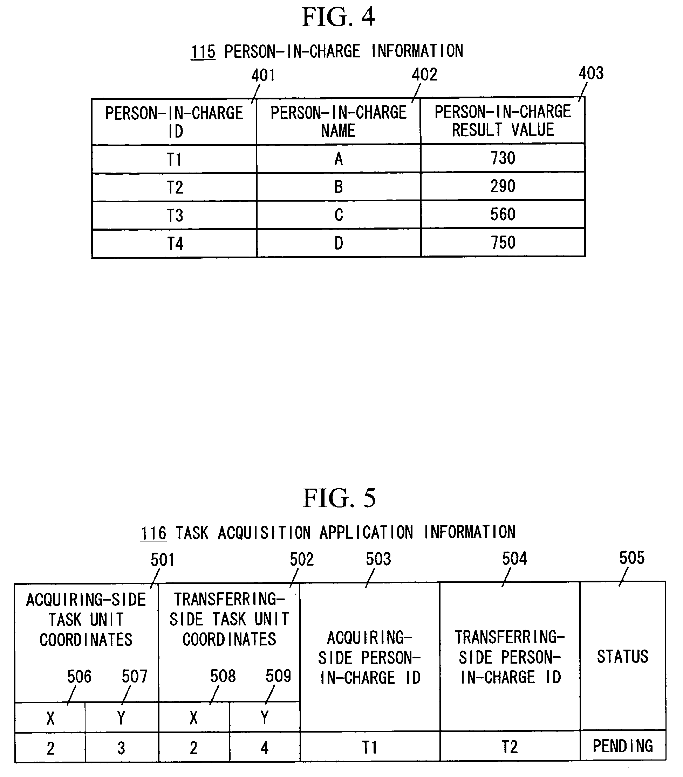

Fig. 4 shows an example of data structure of person-in-charge information 115 in the memory device 112.

Each line of information shown in Fig. 4 is associated with each person in charge of a task.

The person-in-charge information 115 includes data items such as a person-in-charge ID 401, a person-in-charge name 402, and a person-in-charge result value 403.

The person-in-charge ID 401 is an identifier that uniquely identifies each person in charge who is managed with each progress map.

The person-in-charge name 402 is the name of each person in charge.

The person-in-charge result value 403 is a sum of the task unit values of tasks assigned to the individual persons in charge corresponding to the person-in-charge information. It indicates the result achieved by each person in charge.

Fig. 5 shows an example of data structure of the task acquisition application information 116 within the memory device 112.

Each line of information shown in Fig. 5 is associated with each task acquisition application.

The task acquisition application information 116 includes data items such as acquiring-side task unit coordinates 501, transferring-side task unit coordinates 502, an acquiring-side person-in-charge ID 503, a transferring-side person-in-charge ID 504, and a status 505.

The acquiring-side task unit coordinates 501 denote a task unit adjacent to a task unit of which the white flag 209 is set to "true". They show the position of the task unit that the person in charge who acquires a task holds. They are comprised of an X coordinate 506 and a Y coordinate 507.

The transferring-side task unit coordinates 502 show the position of a task unit of which the white flag 209 is set to "true". They are comprised of an X coordinate 508 and a Y coordinate 509.

The acquiring-side person-in-charge ID 503 is the person-in-charge ID of the person in charge of a task corresponding to the acquiring-side task unit.

The transferring-side person-in-charge ID 504 is the person-in-charge ID of the person in charge of a task corresponding to the transferring-side task unit.

The status 505 is a character string indicating the status of task acquisition application information. When its value is "Pending," this indicates that the information concerns a task acquisition application that is pending. When the value is "Approved," this shows that the information concerns history information approved by the progress manager. When the value is "Disapproved," this shows that the information concerns history information that has been disapproved by the progress manager.

Hereafter, the processes performed by the progress management system described above according to the present embodiment will be described.

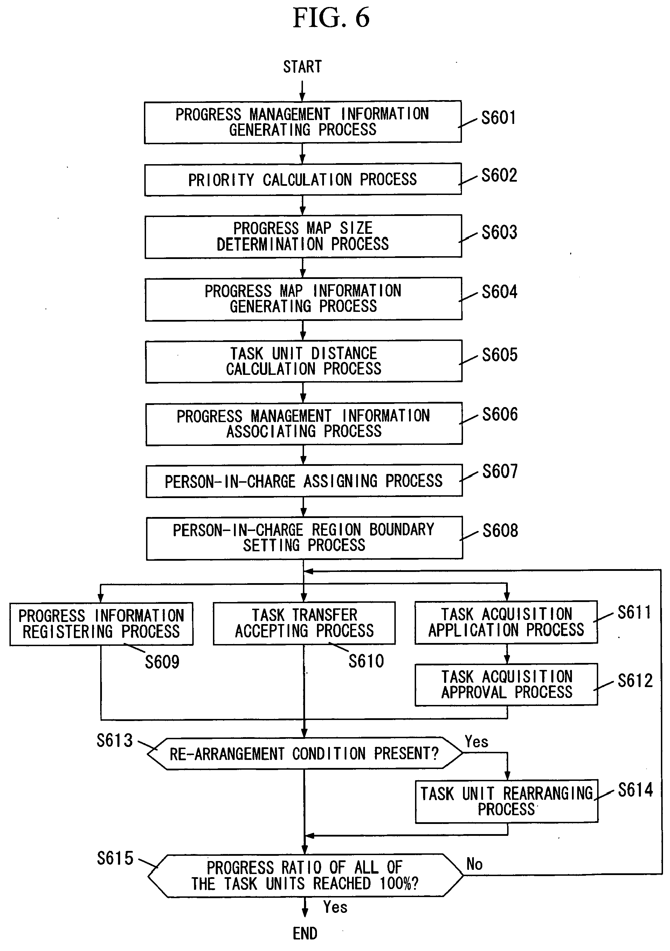

Fig. 6 shows a flowchart illustrating the outline of the processes performed by the present system.

First, in the progress manager's client device 120, the Gantt chart operating program 125 displays a Gantt chart editing screen in response to an operation by the progress manager, so as to carry out a progress management information generating process (step 601). The progress management information that is generated is transmitted to the server device 110, in which the progress information control program 111 of the server device 110 stores it in the memory device 120.

The Gantt chart operating program 125, in response to an operation on the Gantt chart editing screen, carries out a priority calculating process (step 602). The calculated priority is transmitted to the server device 110, where the progress information control program 111 stores it in the memory device 112.

The Gantt chart operating program 125, in response to an operation on the Gantt chart editing screen, displays a progress map generating screen, and carries out a progress map size determining process (step 603), a progress map information generating process (step 604), a task unit distance calculating process (step 605), and a progress management information associating process (step 606). Each process result is transmitted to the server device, where the progress management control program stores it in the memory device.

Then, the manager's progress map operating program 126, in response to an operation by the progress manager, receives the progress management information 113 and the progress map information 114 stored in the memory device 112, via the progress information control program 111 of the server device 110. The program then generates a progress map and displays it on the progress management screen.

The manager's progress map operating program 126, in response to an operation by the progress manager, carries out a person-in-charge assigning process (step 607). The person-in-charge information 115 that is generated is transmitted to the server device 110, where the progress management control program 111 stores it in the memory device 112.

After persons in charge are assigned to all of the tasks, the manager's progress map operating program 126 carries out a person-in-charge region boundary setting process (step 608). The person-in-charge region boundary information that is set is transmitted to the server device 110, where the progress management control program 111 stores it in the progress map information 114 of the memory device 112.

Based on the thus generated progress map, progress management is conducted. The progress management involves a progress information registering process (step 609), a task transfer accepting process (step 610), and a task acquisition application/task acquisition approval process (steps 611, 612).

In the progress information registering process (step 609), each person-in-charge's progress map operating program 135 accepts the input of progress information from each person in charge, and then calculates a person-in-charge result value. The progress information and the calculated person-in-charge result value are transmitted to the server device 110, where the progress management control program 111 stores them in the progress management information 113 of the memory device 112.

In the task transfer accepting process (step 610), each person-in-charge's progress map operating program 135 accepts the input of a task transfer request from each person in charge, and then carries out a task transfer setting. The task transfer information is transmitted to the server device 110, where the progress management control program 111 stores it in the progress management information 113 of the memory device 112.

In the task acquisition application process (step 611), each person-in-charge's progress map operating program 135 accepts an acquisition request from each person-in-charge regarding a task of which a transfer is requested, and carries out a task acquisition application information registration. The task acquisition application information is transferred to the server device 110, where the progress management control program 111 stores it in the task acquisition application information 116 in the memory device 112.

In the task acquisition approval process (step 612), in response to a task acquisition application, the manager's progress map operating program 126 carries out a process for the approval of task acquisition in accordance with an operation by the progress manager. The task acquisition/approval information is transmitted to the server device 110, where the progress management control program 111 updates the progress management information 113, progress map information 114, and task acquisition application information 116 in the memory device 112.

During progress management, it is determined whether or not a rearranging condition has arisen concerning a task unit on the progress map to which a task is associated (step 613). If such a rearranging condition has arisen, a re-arranging process (step 614) is carried out.

The above processes are repeated until all of the task unit progress ratios become 100% (step 615).

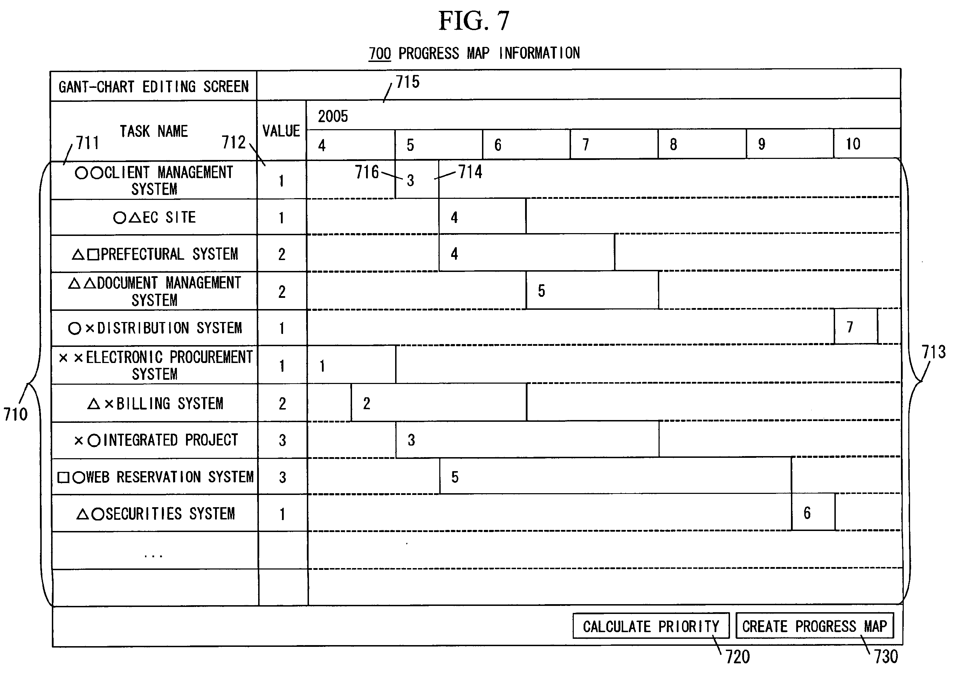

Fig. 7 shows an example of the configuration of a Gantt chart editing screen displayed by the Gantt chart operating program 125 during a progress management information input process.

The Gantt chart editing screen 700 includes a Gantt chart display unit 710, a priority calculating button 720, and a progress map creating button 730.

The Gantt chart display unit 710 displays a task name display column 711, a value display column 712, and a task bar display section 713, for each line indicating each task.

The task name display column 711 shows an arbitrarily chosen name of each task that is entered. The thus entered task name is stored in the task name 202 of the progress management information 113.

The value display column 712 shows an arbitrarily chosen value that is entered for each task. The thus entered value is stored in the value 205 of the progress management information 113.

In the task bar display section 713, each line is divided into regions where task bars 714 indicating the execution period of each task can be set. The task bars 714 indicate the execution period of each task. At the left and right ends of the task bars 714, a task start date and a task end date are set. At the top of the task bar display section 713, time coordinates 715 are set. The time coordinates 715 are coordinates that indicate task start and end dates set for each task bar 714. When setting a task bar 714, a position where the mouse is clicked in each region of the task bar display section 713 is set as the left end (task start date) of the task bar 714, while the next position the mouse is clicked is set as the right end (task end date) of the task bar 714.

On the task bars 714, priority 716 calculated by the Gantt chart operating program 125 in response to the depressing of a priority calculation button 720 is displayed. The calculation of priority 716 will be described later.

The progress map creating button 730 is a button for displaying a progress map generating screen, which will be described later.

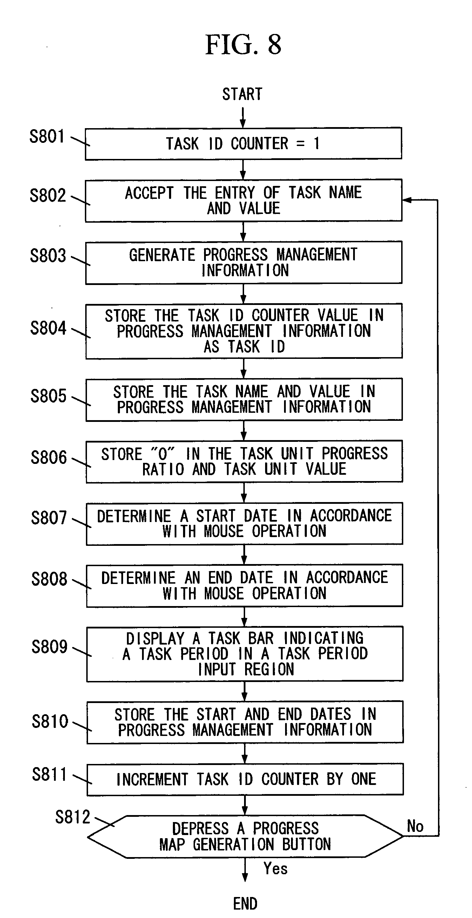

Fig. 8 shows a flowchart of a progress management information generating process sequence that is performed in response to an input operation on the Gantt chart editing screen 700 shown in Fig. 7.

In this process, the Gantt chart operating program 125 sets its own task ID counter at "1" for initialization (step 801).

On the Gantt chart editing screen 700, entry of a task name and value by the progress manager is accepted (step 802).

A new line is added to the progress management information (step 803), and then the current task ID counter value is stored in a task ID of that progress management information line (step 804). The task ID consists of four digits of fixed-length data. If the task ID counter value is less than four digits, the task ID counter value is stored, justifying to the right, and then "0" is added in the vacant digit.

In the progress management information line added in step 803, the task name and value entered at step 802 are stored (step 805), and then the initial value "0" is stored in the task unit progress ratio and the task unit value (step 806).

In response to the mouse operation by the progress manager at an arbitrary position on the task bar display section 713, the task start and end dates are determined (steps 807 and 808), and, together with the task bars 714, a task period calculated from the start and end dates is displayed on the task bar display section 713 of the Gantt chart editing screen 700 (step 809).

The start and end dates determined at step 806 are stored in the progress management information line added at step 803 (step 810).

Finally, the task ID counter value is incremented by "1" (step 811), and then the progress management information generating process is repeated in response to the input of task names or the like for new tasks until the progress map creating button 730 is depressed (step 812).

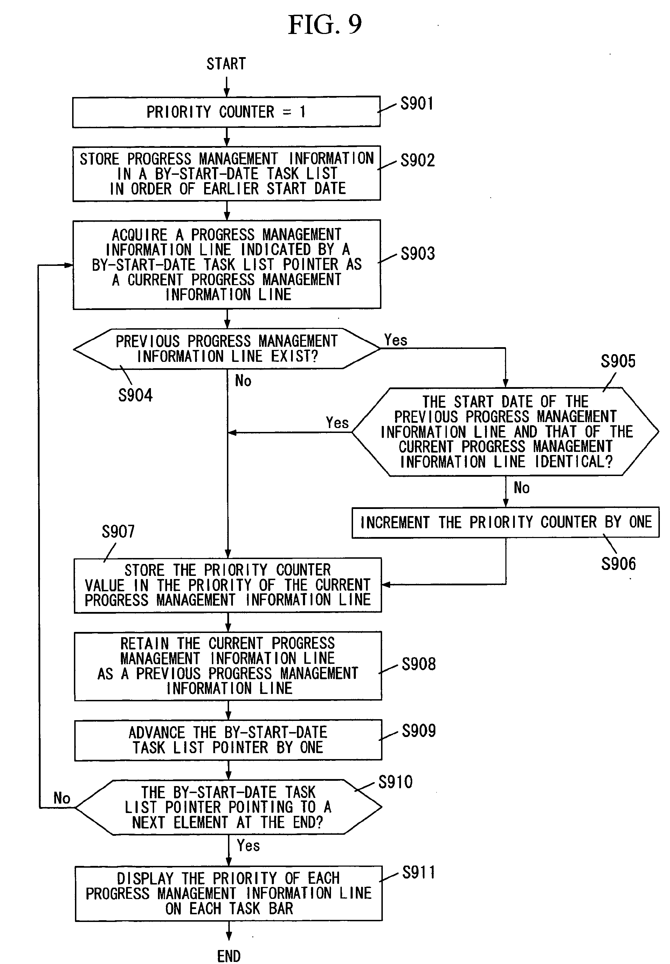

Fig. 9 shows a flowchart of a priority calculating process sequence that is carried out in response to the depressing of the priority calculation button 720 on the Gantt chart editing screen 700 shown in Fig. 7.

In the present process, first the Gantt chart operating program 125 sets its own priority counter to "1" for initialization (step 901). In the present example, the smaller the priority counter value is, the higher the priority.

The progress management information is stored in a by-start-date task list (step 902) in which start dates are listed chronologically in a list form. The list-form data structure herein refers to a data structure comprised of a variable-length sequence in which a plurality of elements can be stored, and of a list pointer that points to an element in the sequence. The list pointer is set such that it points to the head of a sequence in an initial state. By advancing the list pointer, the elements can be sequentially referenced from the head. A list pointer that points to the elements in the by-start-date task list is referred to as a by-start-date task list pointer.

Thereafter, the progress management information line of an element in the by-start-date task list to which the by-start-date task list pointer points is acquired as the current progress management information line (step 903).

It is then determined whether or not there is a previous progress management information line that indicates an element in the by-start-date task list that is immediately before the current progress management information line (step 904).

If there is such previous progress management information line, it is determined whether or not the start date of the previous progress management information line is the same as that of the current progress management information line (step 905). If they are different, the priority counter is incremented by one (step 906).

If it is determined at step 904 that there is no such previous progress management line, or if the both start dates are determined to be the same at step 905, or the priority counter value is stored in the priority of the current progress management information line after step 906 (step 907).

The current progress management information line is stored as a previous progress management information line (step 908), and the by-start-date task list pointer is incremented by one (step 909).

It is then determined whether or not the by-start-date task list pointer points to a next element at the end of the by-start-date task list (step 910). If it points to a next element at the end, the priority of each progress management information line is displayed on each of the task bars 714 of the Gantt chart editing screen 700, and the process ends (step 911). On the other hand, if the result of the determination indicates an element other than a next element at the end, the priority setting process is repeated (steps 903 to 909).

The priority of each progress management information line is transmitted to the server device 110, where the progress management control program 111 stores it in the progress management information 113 in the memory device 112.

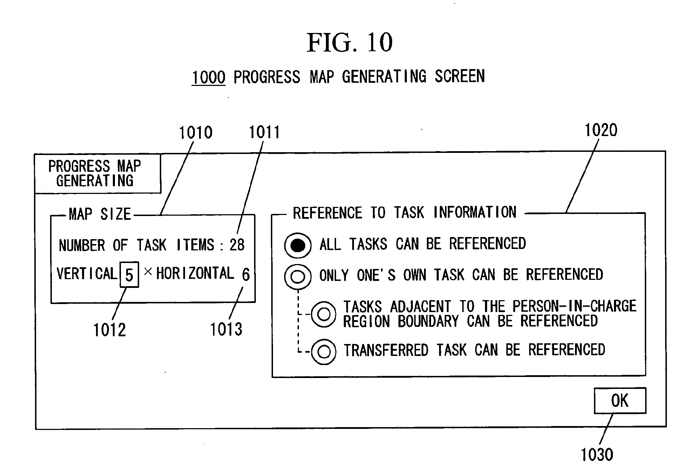

Fig. 10 shows an example of the screen configuration of the progress map generating screen displayed by the manager's progress map operating program 126 in the progress map size determining process.

A progress map generating screen 1000 is displayed in response to the pressing of the progress map creating button 730 on the Gantt chart editing screen 700. It includes a map-size setting portion 1010, a task information reference setting portion 1020, and an OK button 1030.

The map-size setting portion 1010 includes a number-of-tasks display portion 1011, a vertical-size input portion 1012, and a horizontal-size display portion 1013. The number-of-tasks display portion 1011 displays the total number of tasks entered on the Gantt chart editing screen 700. In the vertical-size input portion 1012, the vertical size of the progress map created is entered as an integer value. The horizontal-size display portion 1013 displays, as the horizontal size, the result of dividing the value displayed in the number-of-tasks display portion 1011 by the value entered in the vertical-size input portion 1012.

The task information reference setting portion 1020 is used for setting the allowed range of task information on the progress map that can be referenced in each person-in-charge's client device 130. In the present example, the setting items that can be selected include "Tasks of all personnel" and "My task only." When the "My task only" is selected as a task that can be referenced, further alternatives "Task adjacent to the person-in-charge region boundary" and "Transferred task" are presented.

On the progress map screen displayed by the manager's progress map operating program 126, the entire task information can be referenced.

After the settings are made in the individual setting portions 1010 and 1020, and the OK button 1030 is depressed, a progress map information generating process is carried out, as will be described later.

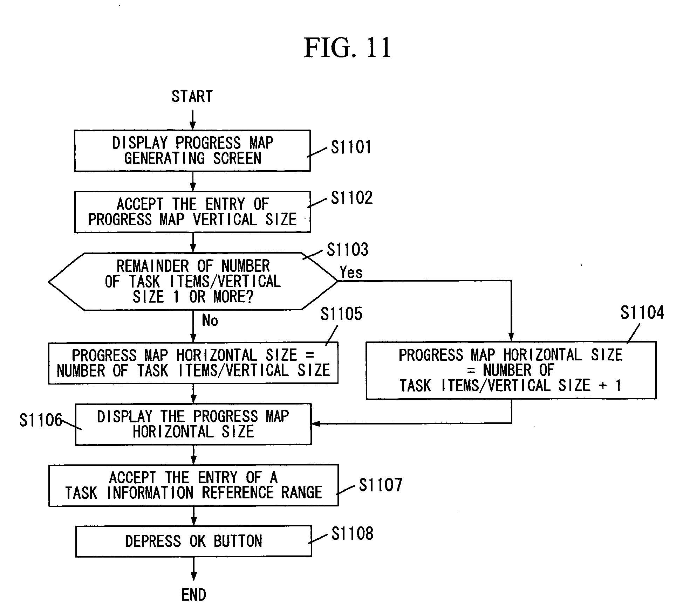

Fig. 11 shows a flowchart of a progress map size determining process sequence on the progress map generating screen 1000 shown in Fig. 10.

In the present process, the Gantt chart operating program 125 first acquires, in response to the depressing of the progress map creating button 730 on the Gantt chart editing screen 700, the number of tasks entered. It then causes the progress map generating screen 1000 to be displayed (step 1101).

On the progress map generating screen 1000 displayed at step 1101, entry of the vertical size by the progress manager is accepted (step 1102).

The number of tasks acquired at step 1101 is divided by the input value of the vertical size entered at step 1102, and it is then determined whether or not the remainder is 1 or more (step 1103). If the remainder is 1 or more, the result of calculation is determined to be the horizontal size +1 (step 1104). On the other hand, if there is no remainder, the calculation result is determined to be the horizontal size (step 1105).

The horizontal size determined at step 1104 or step 1105 is then displayed on the progress map generating screen (step 1106).

Thereafter, selection of the task information reference range is accepted (step 1107), and, in response to the depressing of the OK button 1030, a progress map information generating process is carried out (step 1108), as will be described later.

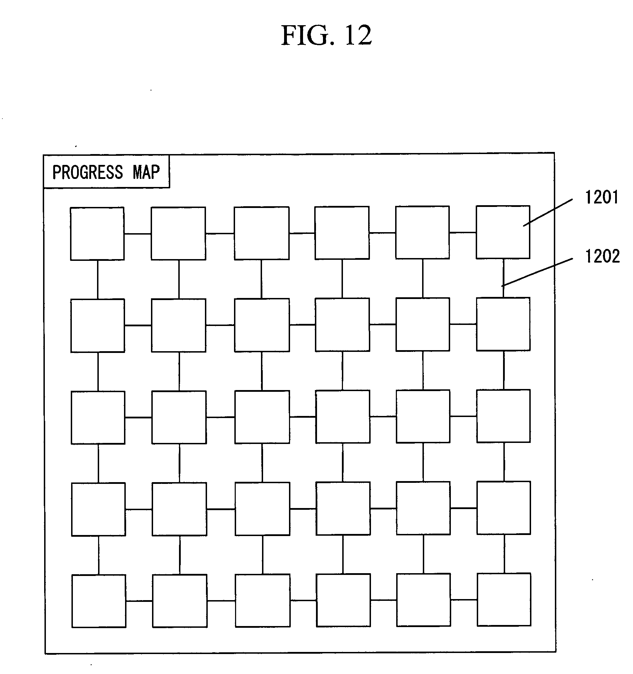

Fig. 12 shows an example of the progress map generated in response to the depressing of the OK button 1030.

The progress map shown in the present example consists of a graph structural chart comprised of task units (nodes) 1201 indicating each task, and lines (edges) 1202 connecting adjacent task units.

Each task unit 1201 corresponds to each task bar 714 on the Gantt chart editing screen 700.

On the progress map, as many task units as are determined by the values of the vertical and horizontal sizes, which are set in the map-size setting portion 1010 on the progress map generating screen 1000, are disposed in the vertical and horizontal directions.

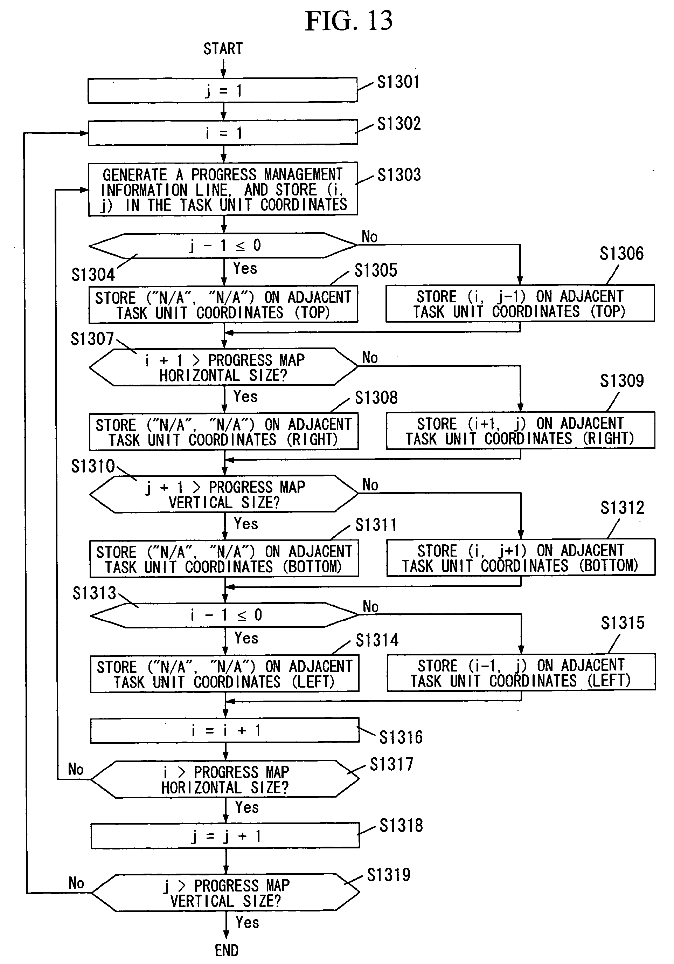

Fig. 13 shows a flowchart of a process sequence for generating progress map information in accordance with the progress map size that was set on the progress map generating screen 1000 shown in Fig. 10.

The Gantt chart operating program 125 first substitutes "1" for variable j (step 1301). Variable j is a numerical value that constitutes the Y coordinate value of the task unit coordinates.

Then, "1" is substituted for variable i (step 1302). Variable i is a numerical value that constitutes the X coordinate value of the task unit coordinates.

One progress map information line is generated as the current progress map information line, and (i, j) is stored in the task unit coordinates (step 1303). Specifically, the values of "i" and "j" are stored in the X coordinate 306 and the Y coordinate 307, respectively, of the task unit coordinates 301 of the progress map information shown in Fig. 3. Thus, a progress map information line is generated that corresponds to the task unit having the task unit coordinates (i, j).

Next, adjacent task unit coordinates in the top, right, bottom, and left directions are determined.

For the determination of the adjacent task unit coordinates in the top direction, it is determined whether or not the value of variable j from which one is subtracted is zero or smaller (step 1304). If the value is zero, values ("N/A", "N/A") are stored, which indicate that there is no adjacent task unit at the adjacent task unit coordinates in the top direction (step 1305). On the other hand, if it is determined that the value is 1 or greater, (i, j-1) are stored in the adjacent task unit coordinates in the top direction (step 1306).

For the determination of the adjacent task unit coordinates in the right direction, it is determined whether or not the value of variable i to which one is added is greater than the horizontal size of the progress map (step 1307). If it is greater than the horizontal size, ("N/A", "N/A") are stored at the adjacent task unit coordinates in the right direction (step 1308). On the other hand, if the value is not greater than the horizontal size, (i+1, j) are stored at the adjacent task unit coordinates in the right direction (step 1309).

For the determination of the adjacent task unit coordinates in the bottom direction, it is determined whether or not the value of variable j to which one is added is greater than the vertical size of the progress map (step 1310). If it is greater than the vertical size, ("N/A", "N/A") are stored at the adjacent task unit coordinates in the lower direction (step 1311). On the other hand, if the value is not greater than the vertical size, (i, j+1) are stored at the adjacent task unit coordinates in the lower direction (step 1312).

For the determination of the adjacent task unit coordinates in the left direction, it is determined whether or not the value of variable i from which one is subtracted is zero or smaller(step 1313). If it is zero or smaller ("N/A", "N/A") are stored at the adjacent task unit coordinates in the left direction (step 1314). On the other hand, if the value is 1 or greater, (i-1, j) are stored at the adjacent task unit coordinates in the left direction (step 1315).

After the determination of the adjacent task unit coordinates, the value of variable i is incremented by one (step 1316). It is then determined whether or not the value of variable i is greater than the progress map horizontal size, namely, whether or not as many progress map information lines as the value of the horizontal size of the progress map have been created (step 1317). If variable i is not greater than the horizontal size, the progress map information line generating process is repeated (steps 1303 to 1316).

On the other hand, if variable i is greater than the horizontal size, the value of variable j is incremented by one (step 1318). It is then determined whether or not the value of variable j is greater than the progress map vertical size, namely, whether or not as many progress map information lines as the value of the progress map vertical size have been created (step 1319). If variable j is not greater than the vertical size, variable i is re-initialized (step 1302), and then the progress map information generating process is repeated.

On the other hand, if variable j is greater than the vertical size, the progress map information generating process is terminated and a distance calculation process is carried out, as will be described later.

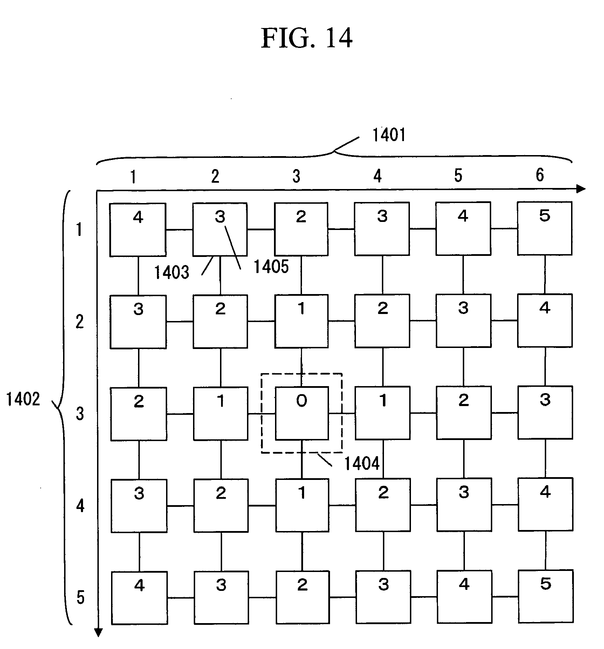

Fig. 14 shows the relationship between the coordinates indicating the position of each task unit on the progress map shown in Fig. 12, and the distance between the reference task unit and each task unit.

The X coordinate 1401 represents the coordinate of the progress map in the horizontal direction. The number on the coordinate indicates a coordinate value.

The Y coordinate 1402 represents the coordinate of the progress map in the vertical direction. The number on the coordinate indicates a coordinate value.

On the progress map of the present example, the position of each task unit on the progress map is indicated by the X coordinate 1401 and the Y coordinate 1402. For example, a task unit 1403 can be represented by X coordinate=2 and Y coordinate=1. In the following description, the position of task units is indicated by coordinates (X, Y). For example, a task unit 1403 is represented by (2,1).

A task unit 1404 enclosed by dotted line indicates the center of the progress map. In the example of Fig. 14, the coordinates of the central task unit 1404 are (3, 3).

The numbers 1405 in each task unit indicate the distance from the central task unit 1404. For example, the task unit 1403 has the distance "3" from the central task unit 1404.

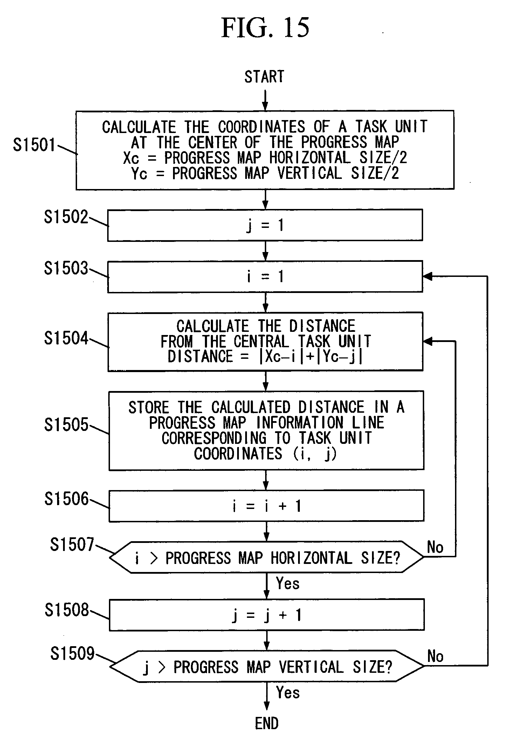

Fig. 15 shows a flowchart of the sequence of a process for calculating the distance of each task unit on the progress map.

In this process, the Gantt chart operating program 125 first calculates the task unit coordinates (Xc, Yc) of the task unit at the center of the progress map (step 1501). For the calculation of the central task unit coordinates, the X coordinate value Xc is considered to be one half of the progress map horizontal size, and the Y coordinate value Yc is considered to be one half of the progress map vertical size (with the first decimal point being rounded up). In the example of Fig. 14, the central coordinates are (3, 3).

Then, the distance of each task unit is calculated. For the calculation of distance, "1" is initially substituted for variable j (step 1502). Variable j is a numerical value that constitutes the Y coordinate value of the task unit coordinates.

Next, "1" is substituted for variable i (step 1503). Variable i is a numerical value that constitutes the X coordinate value of the task unit coordinates.

For each task unit, the distance from the central task unit coordinates (Xc, Yc) is calculated (step 1504), and the result of calculation is stored in a progress map information line (step 1505). In this case, the distance is calculated as the sum of the absolute values of the differences in the coordinate values (|X coordinate of the central task unit - X coordinate of a task unit| + |Y coordinate of the central task unit - Y coordinate of the task uniti). For example, in the case of the task unit 1403 of Fig. 14, the task unit coordinates are (2, 1), such that its distance is |3-2| + |3-1| = 3. Thus, the result of calculation "3" is shown as the number 1405.

After the calculation of the distance, the value of variable i is incremented by one (step 1506), and it is determined whether or not the value of variable i is greater than the progress map horizontal size (step 1507). If variable i is determined to be not greater than the horizontal size, the distance calculation is repeated (steps 1504 to 1506).

On the other hand, if variable i is greater than the horizontal size, the value of variable j is incremented by one (step 1508), and it is determined whether or not the value of variable j is greater than the progress map vertical size (step 1509). If variable j is determined to be not greater than the vertical size, variable i is re-initialized (step 1503), and the distance calculation is repeated (steps 1504 to 1506).

If variable j is greater than the vertical size, the distance calculation process is terminated, and a progress management information associating process is performed, as will be described later.

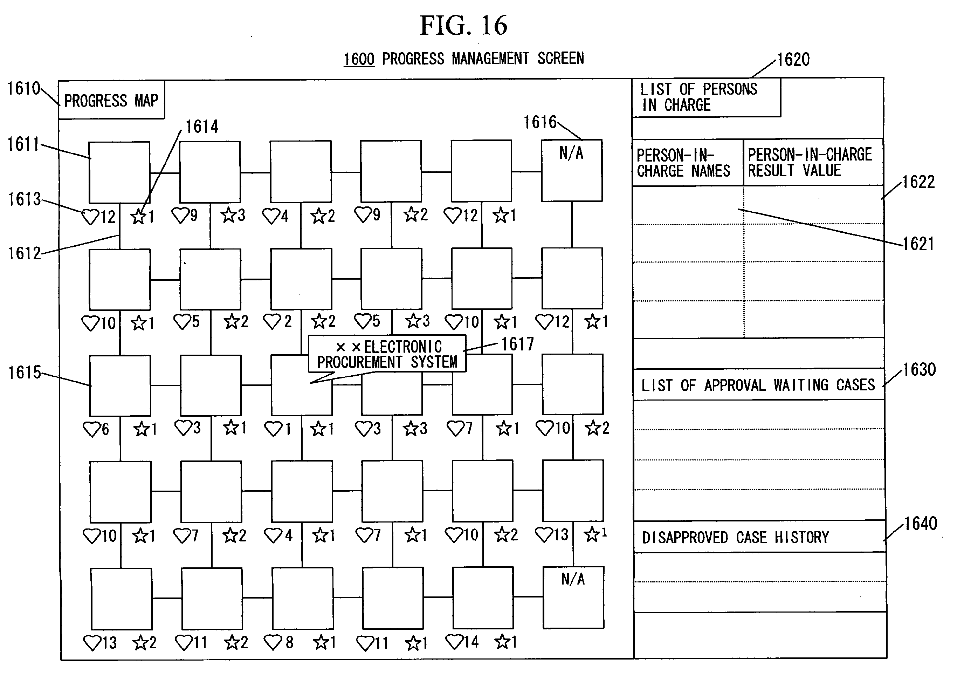

Fig. 16 shows an example of the screen configuration of a progress management screen.

A progress management screen 1600 of the present example includes a progress map display portion 1610 that shows the progress map shown in Figs. 12 and 14, a person-in-charge list display portion 1620, an approved case list display portion 1630, and a disapproved case history display portion 1640.

In the progress map display portion 1610, the progress map is shown in the form of a graph structural chart consisting of task units 1611 and connection lines 1612. Each task unit 1611 is associated with priority 1613 indicated by a heart-shaped figure and a number, and value 1614 indicated by a star-shaped figure and a number. For example, a task unit 1615 is indicated to have priority 1613 of "6" and value 1614 of "1."

A task unit 1616 shows that it has no associated progress management information, namely, there is no corresponding task. In this case, "N/A" stored in the corresponding task ID 302 of the progress map information 114 is displayed on the task unit 1616.

Task information 1617 is shown in a pop-up upon moving the mouse pointer over each task unit 1611. The task information 1617 is displayed in accordance with the task information reference setting on the progress map generating screen 1000 shown in Fig. 10.

The person-in-charge list display portion 1620 includes a person-in-charge name input column 1621 for the entry of person-in-charge names assigned to each task unit in a subsequently described assigning process, and a person-in-charge result value display column 1622 for displaying a person-in-charge result value of a person in charge assigned to each task unit.

An approval waiting case list display portion 1630 shows a list of cases for which applications for acquisition have been filed in the subsequently described task transfer process.

A disapproved case history display portion 1640 displays a list of cases for which acquisition applications have been disapproved in a subsequently described task transfer process.

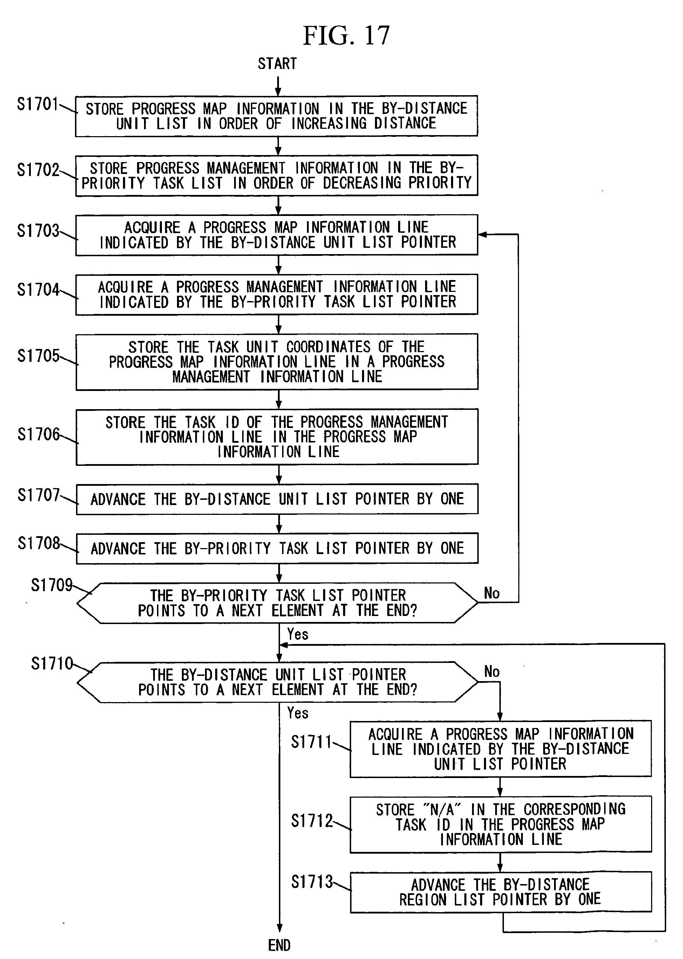

Fig. 17 shows a flowchart of a process for associating the task units 1611 in the progress map display portion 1610 on the progress management screen 1600 with individual tasks.

In this process, the Gantt chart operating program 125 initially stores the progress map information 114 in a by-distance unit list of units arranged in order of increasing distance in a list form (step 1701).

Then, the progress management information 113 is stored in a by-priority task list of tasks arranged in order of decreasing (or high) priority (step 1702).

In this case, each list also has a list pointer pointing to each element.

A progress map information line pointed to by the list pointer in the by-distance unit list and a progress management information line pointed to by the list pointer of the priority task list are both acquired (steps 1703 and 1704), and then the following associating process is carried out.

In the associating process, task unit coordinates 301 are extracted from the progress map information line acquired at step 1703 and then stored in the progress management information line acquired at step 1704 (step 1705). Similarly, task ID 201 is extracted from the progress management information line and stored in the progress map information line (step 1706). Thus, the progress management information line and the progress map information line are associated, thereby making it possible for both lines to reference each other.

After the associating process, the list pointer of the by-distance unit list and the list pointer of the by-priority task list are each incremented by one (steps 1707 and 1708).

It is determined whether or not the list pointer of the by-priority task list points to a next element at the end (step 1709). If not, the progress map information line pointed to by the list pointer and the progress management information line are acquired, and the associating process is repeated (steps 1703 to 1708).

On the other hand, if the next element at the end is being pointed to, it is determined whether or not the list pointer of the by-distance unit list points to the next element at the end (step 1710).

If the determination indicates an element other than the next element at the end, a progress map information line indicated by the list pointer of the by-distance unit list is acquired (step 1711), and "N/A" is stored in the corresponding task ID 302 (step 1712), followed by further incrementing the list pointer by one (step 1713).

If the next element at the end is being pointed to, the associating process is terminated.

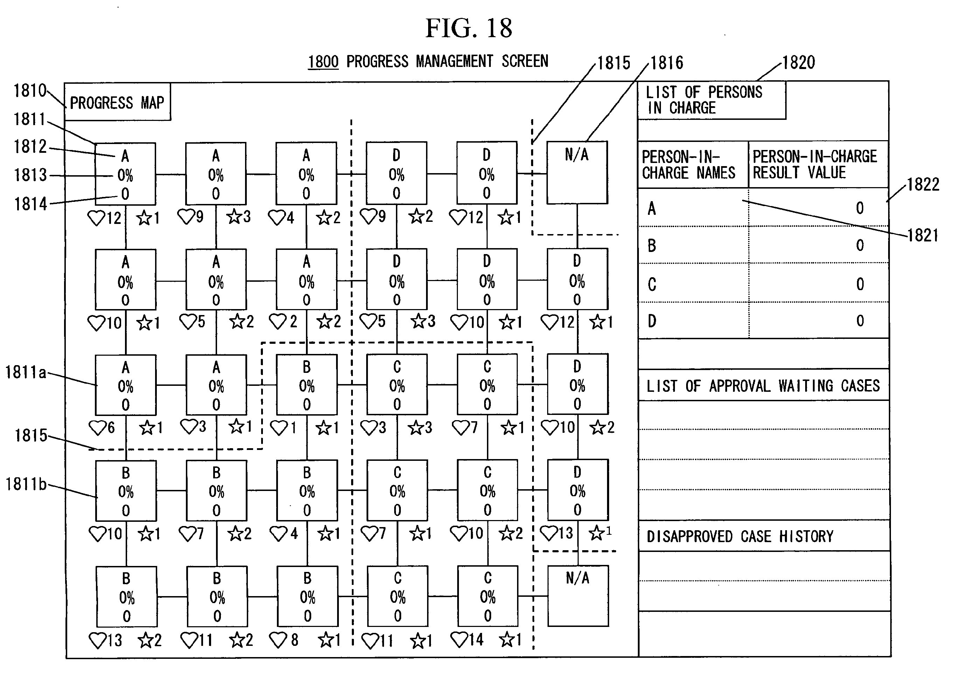

Fig. 18 shows the progress management screen on which persons in charge are assigned to individual tasks.

As shown in the figure, on each task unit 1811 in the progress map display portion 1810 on the progress management screen 1800, there are displayed a person-in-charge name 1812, a task unit progress ratio 1813, and a task unit value 1814. In addition, a person-in-charge region boundary line 1815 that divides the progress map display portion 1811 into regions for individual persons in charge is displayed.

In a person-in-charge name input column 1821 of a person-in-charge list display portion 1820, a list of person-in-charge names that have been entered is displayed. The person-in-charge names entered in the person-in-charge name input column 1821 are stored in the person-in-charge name 402 of the person-in-charge information 115 shown in Fig. 4. In a person-in-charge result value display column 1822, "0" is shown as the initial value of the result value for each person in charge.

In each task unit 1811, there is shown the person-in-charge name 1812 of the person in charge arbitrarily assigned by the manager or the like from among the persons in charge displayed in the person-in-charge list display portion 1820. In the person-in-charge assigning operation, a certain person-in-charge name displayed in the person-in-charge list display portion 1820, for example, is dragged and dropped in a desired task unit 1811.

If the person-in-charge names assigned are different between adjacent task units 1811, the person-in-charge region boundary line 1815 is shown between such task units 1811. For example, because person in charge A is assigned to a task unit 1811 a and person in charge B is assigned to a task unit 1811 b, the person-in-charge region boundary line 1815 is shown between the task units 1811a and 1811b. By thus dividing each task unit 1811 on the progress map between different persons in charge, the volume of work assigned to each person in charge is visually represented.

The person-in-charge region boundary line 1815 is also displayed between a task unit 1811 and a task unit 1816 that does not have an associated task.

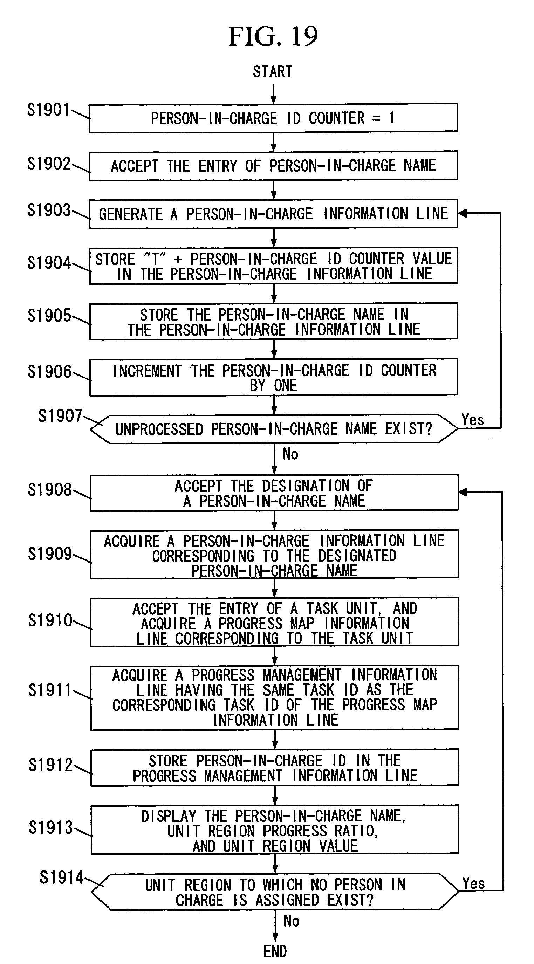

Fig. 19 shows a flowchart of a person-in-charge assigning process sequence in the progress management screen.

In the person-in-charge assigning process, the manager's progress map operating program 126 sets its own person-in-charge ID counter value at "1" for initialization(step 1901). The program then accepts the entry of person-in-charge names by the progress manager in the person-in-charge name input column (step 1902), and then carries out a person-in-charge information storing process.

In the person-in-charge information storing process, initially a new person-in-charge information line is added (step 1903).

Then, a given letter ("T" in the present example) at the head of the person-in-charge ID is coupled with the current person-in-charge ID counter value so as to create a person-in-charge ID. The person-in-charge ID is then stored in the person-in-charge ID of the person-in-charge information line added at step 1903 (step 1904).

The person-in-charge name entered at step 1902 is stored in the person-in-charge name in the person-in-charge information line added at step 1903 (step 1905).

After the person-in-charge ID counter value is incremented by one (step 1906), it is determined whether or not there is any person-in-charge name remaining in the person-in-charge list display portion for which the person-in-charge information storing process has not been performed (step 1907). If there is an unprocessed person-in-charge name, the person-in-charge information storing process is repeated (steps 1903 to 1906).

After all of the person-in-charge names entered in the person-in-charge list display portion have been subjected to the person-in-charge information storing process, a process for assigning a person in charge to each task unit is carried out.

In the person-in-charge assigning process, in accordance with the operation by the progress manager, designation of a person-in-charge name is accepted (step 1908), and then a person-in-charge information line corresponding to the thus designated person-in-charge name is acquired (step 1909).

Then, in response to the progress manager's operation, designation of a task unit is accepted, and a progress map information line corresponding to the designated task unit is acquired (step 1910).

Based on the corresponding task ID of the progress map information line acquired at step 1910, a progress management information line of the same task ID is acquired (step 1911).

A person-in-charge ID is acquired from the person-in-charge information line, and it is stored in the corresponding person-in-charge ID of the progress management information line acquired at step 1911 (step 1912).

In the task unit on the progress map, the person-in-charge name, a unit progress ratio, and unit value are displayed (step 1913).

It is determined whether or not there exists a task unit to which no person in charge is assigned (step 1914). If such task unit exists, the person-in-charge assigning process is repeated (steps 1908 to 1913). On the other hand, if all of the task units are assigned with persons in charge, the person-in-charge assigning process is terminated, and a person-in-charge region boundary setting process is performed, as will be described later. In the present determination process, task units for which no corresponding task exists are eliminated from the objects for determination.

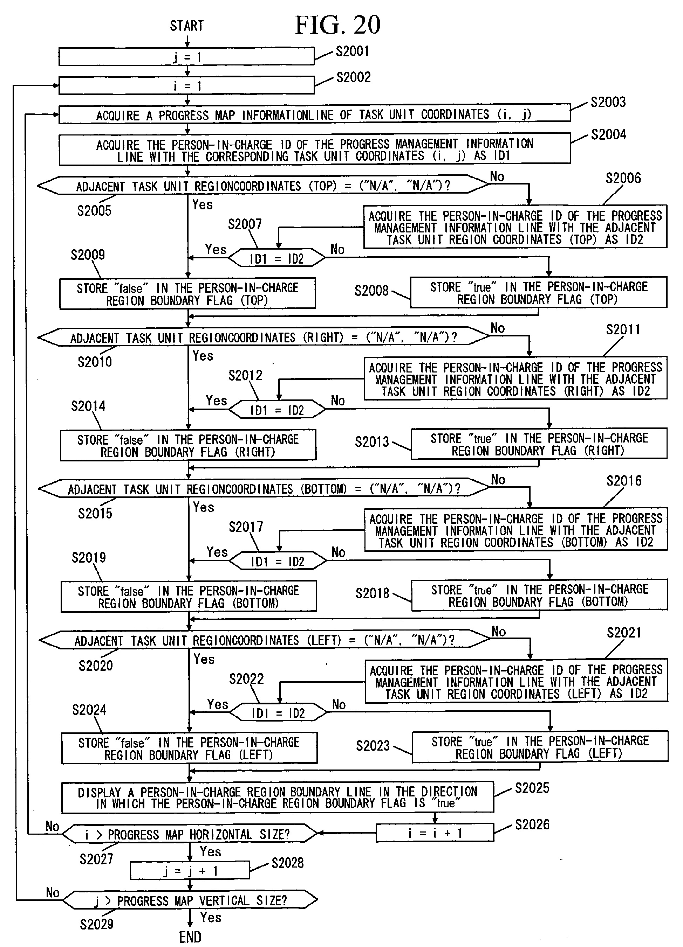

Fig. 20 shows a flowchart of a process for setting a person-in-charge region boundary after each task unit is assigned to a person in charge.

A manager's progress map operating program 126 initially substitutes "1" for variable j, which is a numerical value that constitutes a Y coordinate value of the task unit coordinates (step 2001).

Then, "1" is substituted for variable i, which is a numerical value that constitutes an X coordinate value of the task unit coordinates (step 2002).

A progress map information line with the task unit coordinates (i, j) is acquired (step 2003). The coreresponding person-in-charge ID of progress management information with the corresponding task unit coordinate(i,j) is aquired and it is retained as ID1(step2004).

and then a boundary determination process is performed based on the adjacent task unit coordinates in the top, right, bottom, and left directions.

In the boundary determination process for the top direction, it is determined whether or not the adjacent task unit coordinates in the top direction are ("N/A", "N/A") (step 2005). If it is determined that the adjacent task unit coordinates are not ("N/A", "N/A"), a progress management information line is acquired based on the adjacent task unit coordinates, and the person-in-charge ID of the acquired progress management information line is retained as ID2 (step 2006).

It is determined whether or not ID1 retained at step 2004 and ID2 retained at step 2006 agree with each other (step 2007). If they do not agree, "true" is stored in a person-in-charge region boundary flag in the top direction (step 2008).

On the other hand, if the adjacent task unit coordinates in the top direction are ("N/A", "N/A") at step 2005, or if ID1 and ID2 agree with each other at step 2007, "false" is stored in the person-in-charge region boundary flag in the top direction (step 2009).

In the boundary determination process for the right direction, it is determined whether or not the adjacent task unit coordinates in the right direction are ("N/A", "N/A") (step 2010). If it is determined that the adjacent task unit coordinates are not ("N/A", "N/A"), a progress management information line is acquired based on the adjacent task unit coordinates. The person-in-charge ID of the acquired progress management information line is retained as ID2 (step 2011).

It is determined whether or not ID1 and ID2 agree with each other (step 2012). If they do not agree, "true" is stored in the person-in-charge region boundary flag in the right direction (step 2013).

If, at step 2010, the adjacent task unit coordinates in the right direction are ("N/A", "N/A"), or if ID1 and ID2 agree with each other at step 2012, "false" is stored in the person-in-charge region boundary flag in the right direction (step 2014).

In the boundary determination process for the bottom direction, it is determined whether or not the adjacent task unit coordinates in the bottom direction are ("N/A", "N/A") (step 2015). If it is determined that the adjacent task unit coordinates are not ("N/A", "N/A"), a progress management information line is acquired based on the adjacent task unit coordinates, and the person-in-charge ID of the progress management information line is stored as ID2 (step 2016).

It is determined whether or not ID1 and ID2 agree with each other (step 2017). If they do not agree, "true" is stored in the person-in-charge region boundary flag in the bottom direction (step 2018).

If, at step 2015, the adjacent task unit coordinates in the bottom direction are ("N/A", "N/A"), or if ID1 and ID2 agree with each other at step 2017, "false" is stored in the person-in-charge region boundary flag in the bottom direction (step 2019).

In the boundary determination process for the left direction, it is determined whether or not the adjacent task unit coordinates in the left direction are ("N/A", "N/A") (step 2020). If it is determined that the adjacent task unit coordinates are not ("N/A", "N/A"), a progress management information line is acquired based on the adjacent task unit coordinates, and the person-in-charge ID of the acquired progress management information line is stored as ID2 (step 2021).

It is determined whether or not ID1 and ID2 agree with each other (step 2022). If they do not agree, "true" is stored in the person-in-charge region boundary flag in the left direction (step 2023).

On the other hand, if, at step 2020, the adjacent task unit coordinates in the left direction are ("N/A", "N/A"), or if ID1 and ID2 agree with each other at step 2022, "false" is stored in the person-in-charge region boundary flag in the left direction (step 2024).

As a result of the above determination process, a person-in-charge region boundary line is displayed in the direction in which "true" is set in the person-in-charge region boundary flag (step 2025).

After displaying the person-in-charge region boundary line, the numerical value of variable i is incremented by one (step 2026), and then it is determined whether or not the value of variable i is greater than the progress map horizontal size (step 2027). If it is determined that variable i is not greater than the horizontal size, the person-in-charge region boundary determination process is repeated (steps 2003 to 2026).

On the other hand, if variable i is greater than the horizontal size, the numerical value of variable j is incremented by one (step 2028), and it is determined whether or not the numerical value of variable j is greater than the progress map vertical size (step 2029). If it is determined that variable j is not greater than the vertical size, variable i is re-initialized (step 2002) and the person-in-charge region boundary determination process (steps 2003 to 2026) is repeated.

If variable j is greater than the vertical size, the person-in-charge region boundary determination process comes to an end.

In the following, a method is described for carrying out progress management via the progress management screen showing the progress map in which persons in charge are assigned as described above.

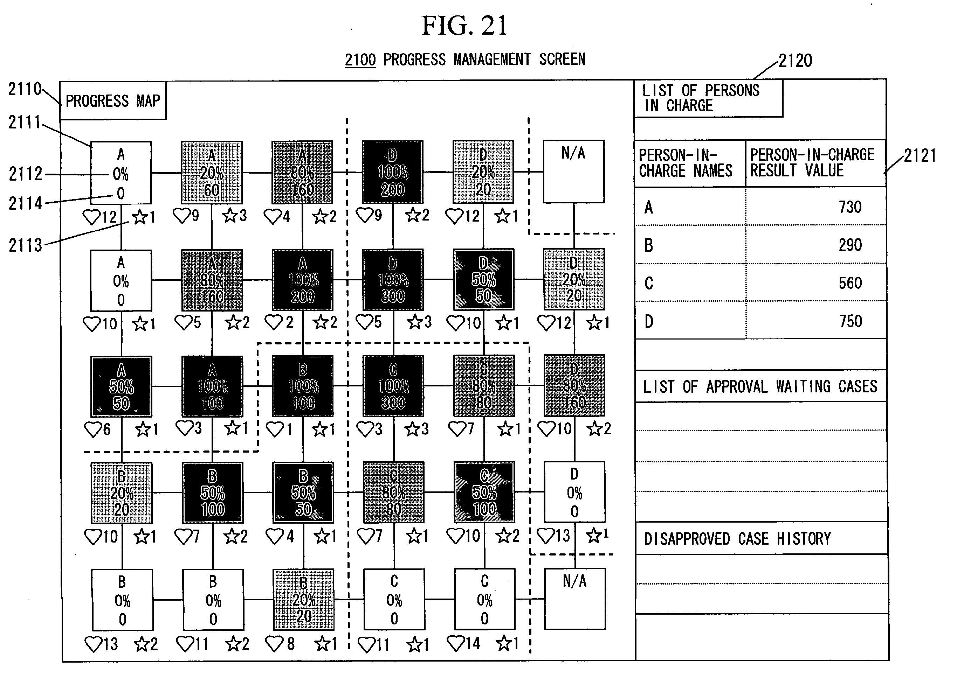

Fig. 21 shows an example of progress information about each task displayed on the progress management screen.

As shown in Fig. 21, in each task unit 2111 in a progress map display portion 2110 on a progress management screen 2100, a task unit progress ratio 2112 entered via the person-in-charge's client device 130, and a task unit value 2114 associated with the task unit progress ratio 2112 and value 2113, are displayed. The task unit progress ratio 2112 is expressed by a numerical value on each of the task units 2111, which are shown in varying shades. For example, when the task unit progress ratio is 100%, the task unit has a dark shade, and the shade becomes lighter as the task unit progress ratio decreases from 80% to 50% to 20%, and so on. When the ratio is 0%, the task unit is shown in white.

Thus, by varying the shade of the color of the task unit 2111 depending on the task unit progress ratio 2112, the progress of each task can be visually expressed. More darker-shaded task units 2111 in the progress map indicate that the overall operation is advancing, whereas more lighter-shaded task units indicate that the overall operation is lagging behind.

In a person-in-charge result value display column 2121 in a person-in-charge list display portion 2120, a person-in-charge result value, which is the sum of the unit value of a task unit assigned to each person in charge, is shown. In the present example, a numerical value "730" is shown as the person-in-charge result value of a person in charge A.

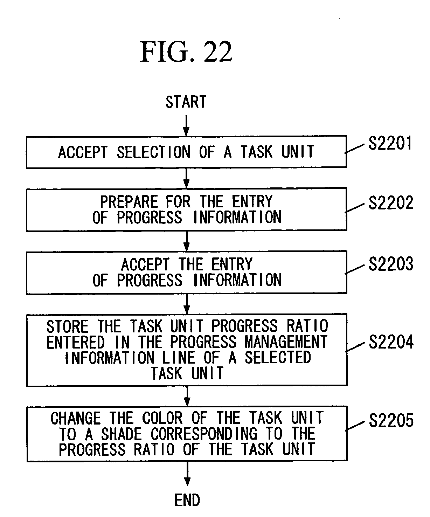

Fig. 22 shows a flowchart of a process for registering progress information concerning each task unit.

In this process, the person-in-charge's progress map operating program 135 accepts a selection of a task unit (step 2201), and renders the system ready for the input of progress information concerning the selected task unit (step 2202).

Entry of progress information by the person in charge is accepted (step 2203), and it is then stored in the task unit progress ratio of a corresponding progress management information line (step 2204).

The person-in-charge's progress map operating program 135, in accordance with the thus stored task unit progress ratio, changes the displayed shade of the task unit and ends the progress information registering process (step 2205). Thereafter, a result value calculation process is carried out as described below.

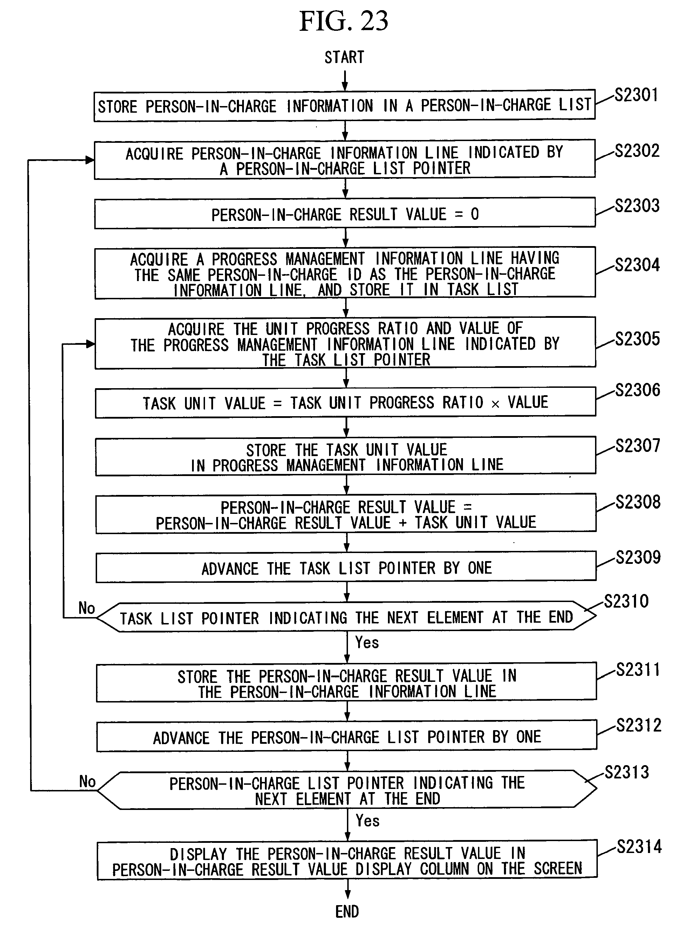

Fig. 23 shows a flowchart of the sequence of the result value calculation process for each person in charge based on the registered progress information.

In this process, the person-in-charge's progress map operating program 135 initially stores the person-in-charge information 115 in a person-in-charge list in a list form (step 2301).

A person-in-charge information line of an element indicated by the list pointer in the person in charge list is acquired (step 2302).

The person-in-charge result value is initialized by setting it at "0" (step 2303).

Based on the person-in-charge ID of the person-in-charge information line acquired at step 2302, progress management information lines having the same person-in-charge ID are areacquired and stored in a task list in a list form (step 2304).

A progress management information line of an element indicated by the list pointer of the task list is acquired, and a unit progress ratio and value are extracted (step 2305).

The extracted task unit progress ratio and value are multiplied so as to calculate a task unit value (step 2306).

The task unit value calculated at step 2306 is stored in the progress management information line (step 2307).

The task unit value calculated at step 2306 is added to the person-in-charge result value, thereby obtaining a new person-in-charge result value (step 2308). Thereafter, the list pointer of the task list is advanced by one (step 2309).

It is determined whether or not the list pointer of the task list points to a next element at the end of the task list (step 2310). If it points to an element other than that at the end, the process of calculating the task unit value and adding the person-in-charge result value is repeated (steps 2305 to 2309).

On the other hand, if at step 2310 it is determined that the next element at the end of the task list is being pointed to, the calculated person-in-charge result value is stored in the person-in-charge information line (step 2311), and then the list pointer in the person-in-charge list is advanced by one (step 2312).

It is determined whether or not the list pointer in the person-in-charge list points to the next element at the end (step 2313). If it points to an element other than that at the end, the process of calculating the person-in-charge result value for the next person in charge is repeated (steps 2302 to 2309).

On the other hand, if, at step 2313, it is determined that the next element at the end of the person-in-charge list is being pointed to, the calculated person-in-charge result value is displayed in the person-in-charge result value display column on the progress management screen, and the process comes to an end (step 2314).

In the following, a method is described for the transfer and acquisition of a task between persons in charge in the progress management system of the present embodiment.

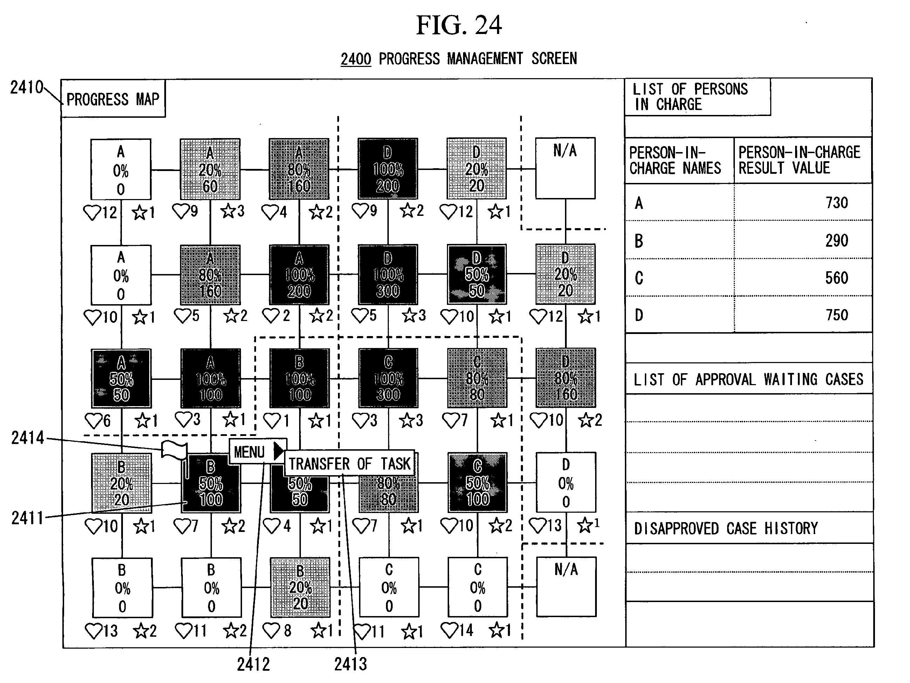

Fig. 24 shows a state in which a task transfer request has been issued from a person in charge on a progress management screen. A task transfer request accepting process is carried out by a person in charge of an arbitrarily designated task unit.

As shown in the figure, a task transfer menu 2413 is displayed on a task unit 2411 in a progress map display portion 2410 on a progress management screen 2400 via a main menu 2412.

In this case, the main menu 2412 is displayed by, for example, right-clicking a task unit 2411 while it is designated with a mouse or the like.

The main menu 2412 includes the task transfer menu 2413. When the task transfer menu 2413 is selected, "true" is stored in the white flag 209 of the progress management information 200 of Fig. 2, and a white-flag icon 2414 is displayed on the task unit 2411 indicating that the task is subject to transfer. The task transfer menu 2413 is only displayed for those task units 2411 whose progress ratio is less than 100%.

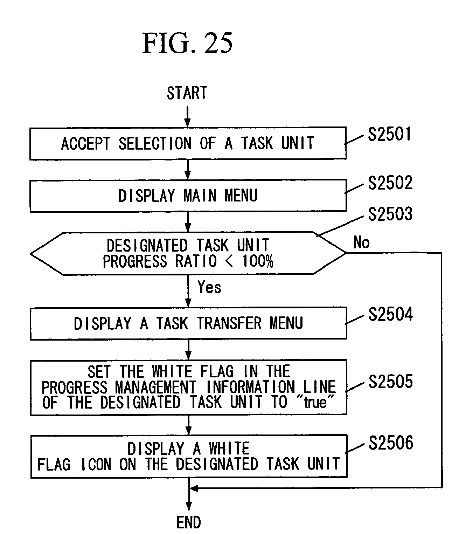

Fig. 25 shows a flowchart of the process for accepting task transfer from the person in charge.

In this process, the person-in-charge's progress map operating program 135, in response to the person in charge's operation, accepts the designation of a task unit that is subject to transfer (step 2501).

The main menu is displayed for the designated task unit (step 2502), and then it is determined whether or not the designated unit progress ratio of the task unit is less than 100% (step 2503).

If it is determined that the unit progress ratio is less than 100%, the task transfer menu is displayed in the main menu (step 2504). On the other hand, if the unit progress ratio is 100%, the process comes to an end without displaying anything in the main menu.

In response to the operation on the task transfer menu displayed at step 2504, the white flag in the progress management information line associated with the selected task unit is set to "true" (step 2505). After displaying a white icon on the selected task unit, the process comes to an end (step 2506).

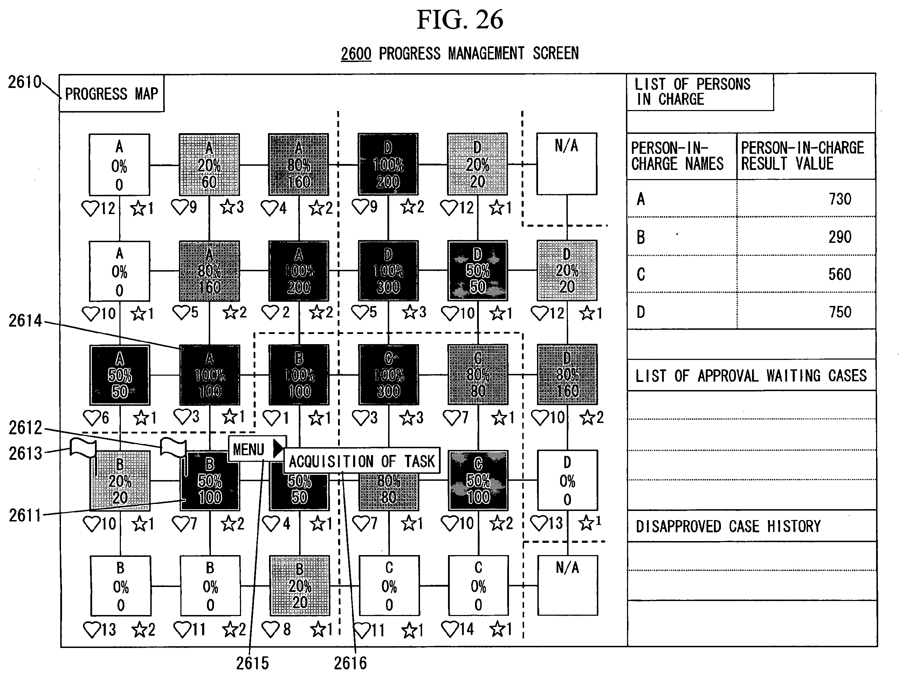

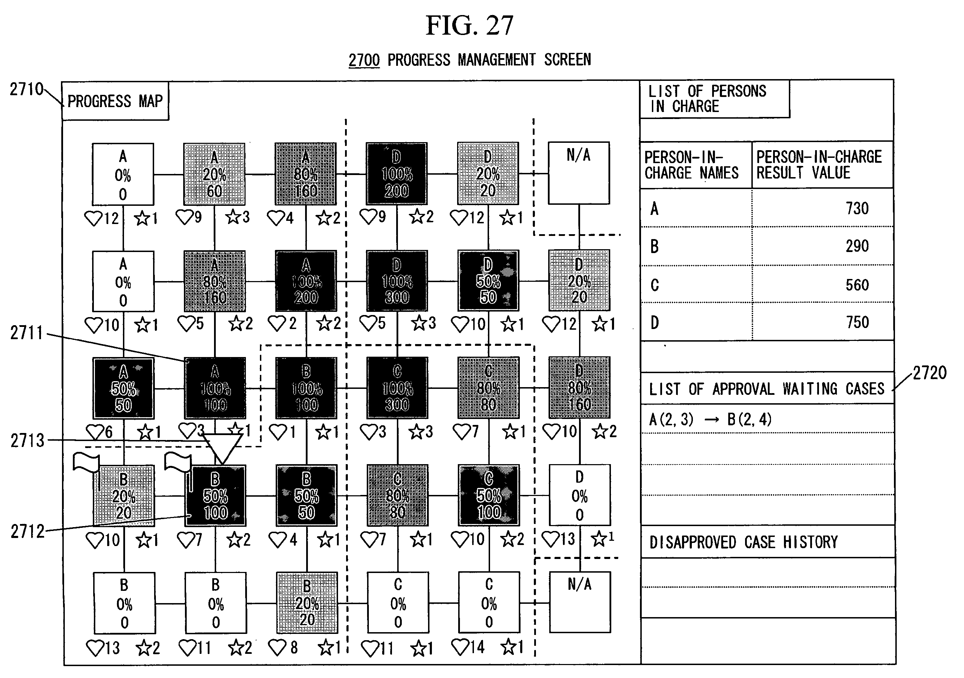

Fig. 26 shows a state in which another person in charge has filed an application for acquiring a task unit for which a transfer request has been issued. Fig. 27 shows a state in which the task unit for which the task acquisition application has been filed is waiting for approval by the manager.

As shown in Fig. 26, in a task map display portion 2610 on a progress management screen 2600, a task acquisition menu 2616 is displayed via a main menu 261 upon selection of a task unit 2611 on the transferring-side indicated by a white-flag icon 2612 and an adjacent task unit 2614 on the acquiring-side adjacent across a person-in-charge region boundary line 2613. Namely, the task acquisition menu 2616 is displayed when a task unit adjacent to a transferring-side task unit that has a different person in charge is selected.

In this case, the main menu 2615 is displayed upon right-clicking the mouse or the like on the task acquiring-side task unit 2614 while it is designated.

When the task acquisition menu 2616, which is included in the main menu 2615, is selected, coordinates are stored in the acquiring-side task unit 501 and the transferring-side task unit 502 in the task acquisition application information 16 shown in Fig. 5. At the same time, as shown in Fig. 27, in a progress map display portion 2710 on a progress management screen 2700, a triangular arrow 2713 is shown between the task acquiring-side task unit 2711 and the task transferring-side task unit 2712, indicating a task approval-waiting state.

In the approval waiting case list display portion 2720, approval-waiting case information is displayed, which includes the person-in-charge name and task unit coordinates of the acquiring-side task unit 2711, and the person-in-charge name and task unit coordinates of the transferring-side task unit 2712.

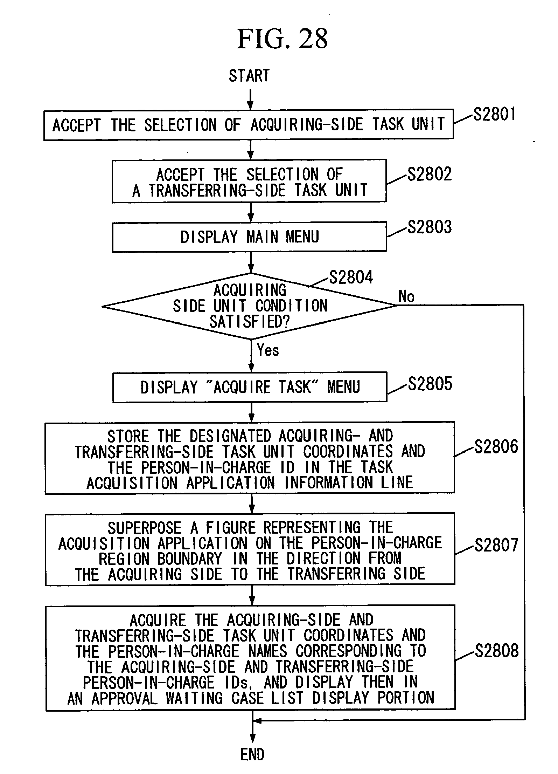

Fig. 28 shows a flowchart of a sequence for processing a task acquisition application filed by a person in charge.

In this process, the person-in-charge's progress map operating program 135, in response to the operation by the person in charge, accepts the designation of an acquiring-side task unit and a transferring-side task unit (steps 2801 and 2802). In this case, the value of the white flag ("true" or "false") is used to distinguish the acquiring-side and the transferring-side.

In response to an operation on the designated transferring-side task unit, the main menu is displayed (step 2803). Regarding the designated acquiring-side task unit, it is determined whether or not an acquiring-side unit conditions is met (step 2804). Specifically, it is determined whether or not the task unit designated on the acquiring-side is adjacent to the transferring-side task unit across a person-in-charge region boundary line, based on the task unit coordinates, the adjacent task unit coordinates, and the person-in-charge region boundary flag.

If the acquiring-side unit condition is determined to be met, the task acquisition menu is displayed in the main menu (step 2805). On the other hand, if the acquiring-side unit condition is not met, the process comes to an end without displaying anything in the main menu.

In response to an operation on the task acquisition menu displayed at step 2805, a new line is added to the task acquisition application information. The task unit coordinates of the both acquiring-side and transferring-side task units that have been selected, and the person-in-charge ID are stored in the added task acquisition application information line (step 2806).

Between the transferring-side and acquiring-side task units on the progress map, a figure is displayed in the direction from the acquiring-side to the transferring-side, indicating an acquisition application (step 2807).

The process comes to an end after acquiring and displaying the person-in-charge names and task unit coordinates corresponding to the acquiring-side and transferring-side task units in the approved case list display portion on the progress management screen (step 2809).

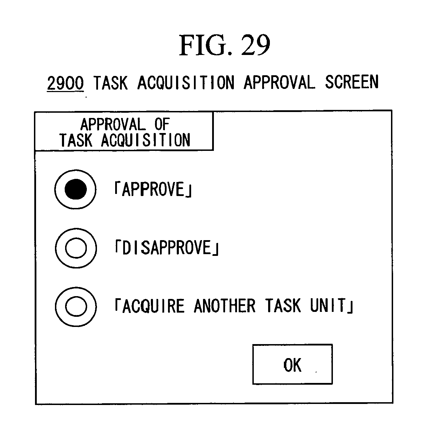

Fig. 29 shows an example of the screen configuration of a task acquisition approval screen concerning a task unit for which an acquisition application has been filed.

A task acquisition approval screen 2900 is displayed, for example, upon designating an approval-waiting case shown in a list of approval waiting case on the progress management screen, and then double-clicking the mouse, for example, in accordance with the manager's progress map operating program 126.

The task acquisition approval screen 2900 offers "Approve," "Disapprove," and "Acquire another task" as selective items. "Approve" is an item selected when the progress manager approves the acquisition of a task. "Disapprove" is an item selected when the progress manager does not approve the acquisition of a task. "Acquire another task" is an item selected when the progress manager does not approve the acquisition of a task and instead instruct the person in charge who filed the task acquisition application to acquire another task unit.

When a OK button 2901 is depressed when any of the items is selected, an acquisition approval process is conducted as described below.

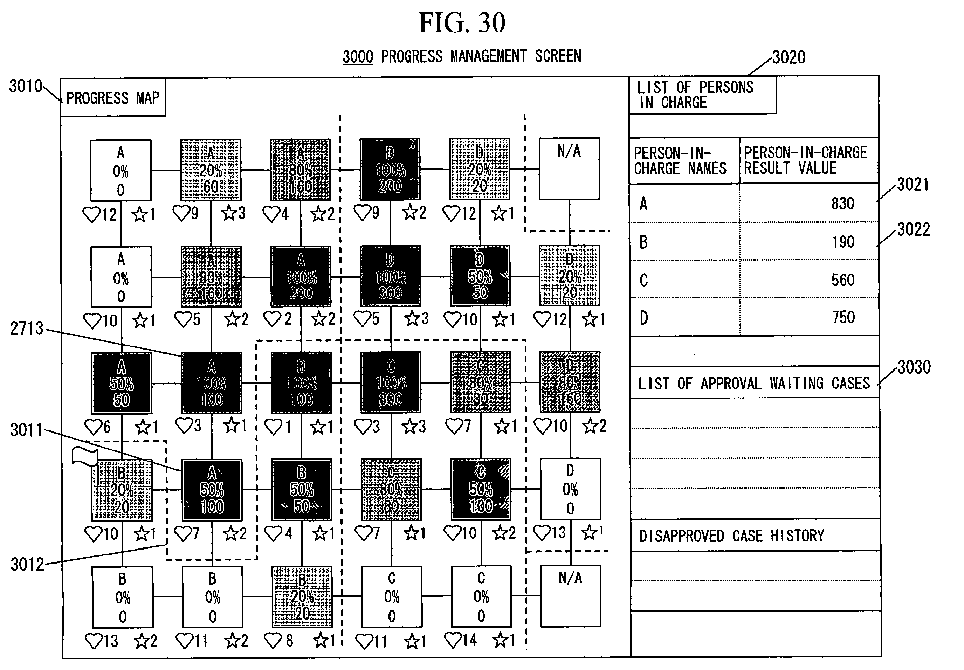

Fig. 30 shows a progress management screen in the case where "Approve" is selected on the approval screen.

As shown in the figure, on a progress management screen 3000, the display of the person-in-charge name concerning a transferring-side task unit 3011 on a progress map display portion 3010 is changed, and also the person-in-charge region boundary line 3012 is changed. In the present example, it is indicated that the region of person in charge A has increased while that of person in charge B has decreased.

Further, the white-flag icon indicated on the transferring-side task unit 3011 and the triangular arrow indicated between the task units 3011 and 3013 on the both transferring- and acquiring-sides are deleted.

In a person-in-charge list display portion 3020, the person-in-charge result value is changed. Specifically, a person-in-charge result value 3021 of person in charge A who acquired a task is increased over the person-in-charge result value prior to approval as shown in Fig. 27, by 100, which is the task unit value of the acquired task unit 3011. The person-in-charge result value 3022 of person in charge B who transferred the task is decreased by 100 from the person-in-charge result value prior to transfer.

In an approval-waiting-case list display portion 3030, the approval-waiting case information is deleted.

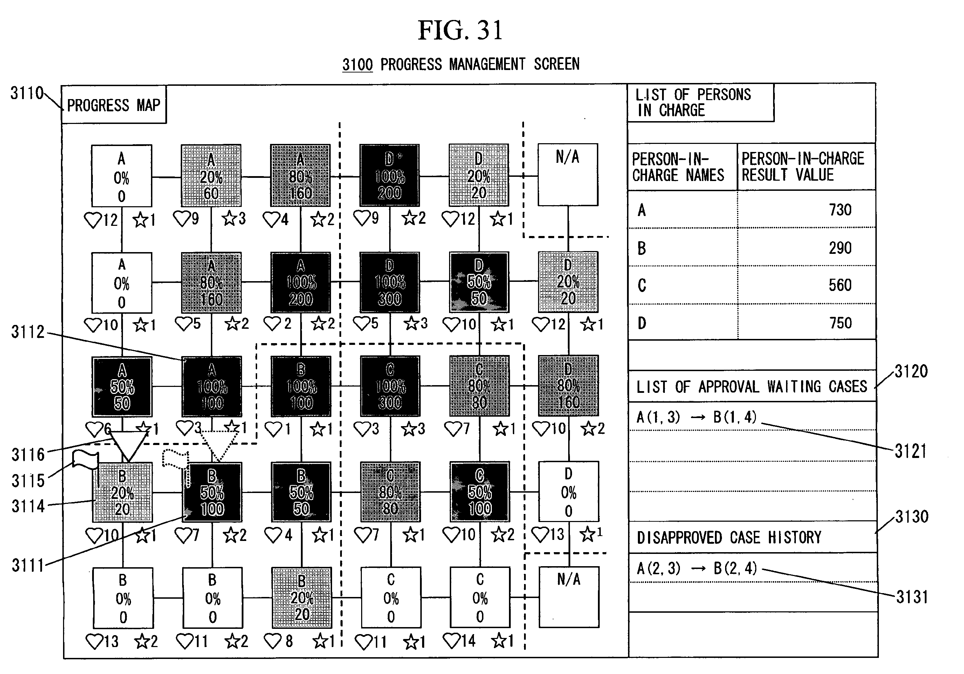

Fig. 31 shows a progress management screen in the case where, on the approval screen, "Acquire another task unit" is selected.

As shown in this figure, in a progress management screen 3100, the white-flag icon that had been indicated on a task unit 3111 and the triangular arrow that had been indicated between the task units 3111 and 3112 on the transferring- and acquiring-sides in the progress map display portion 3110 are deleted (as indicated by broken lines in the figure).

On the other hand, another task unit 3114 designated by the progress manager is indicated with a white-flag icon 3115 and a triangular arrow 3116.

In an approval waiting case list display portion 3120, the approval waiting case information that had been shown is deleted, while approval waiting case information 3121 concerning another task unit designated by the progress manager is shown.

In a disapproved case history display portion 3130, disapproved case information 3131 is shown for the approval waiting case information that has been deleted from the approval waiting case list display portion.

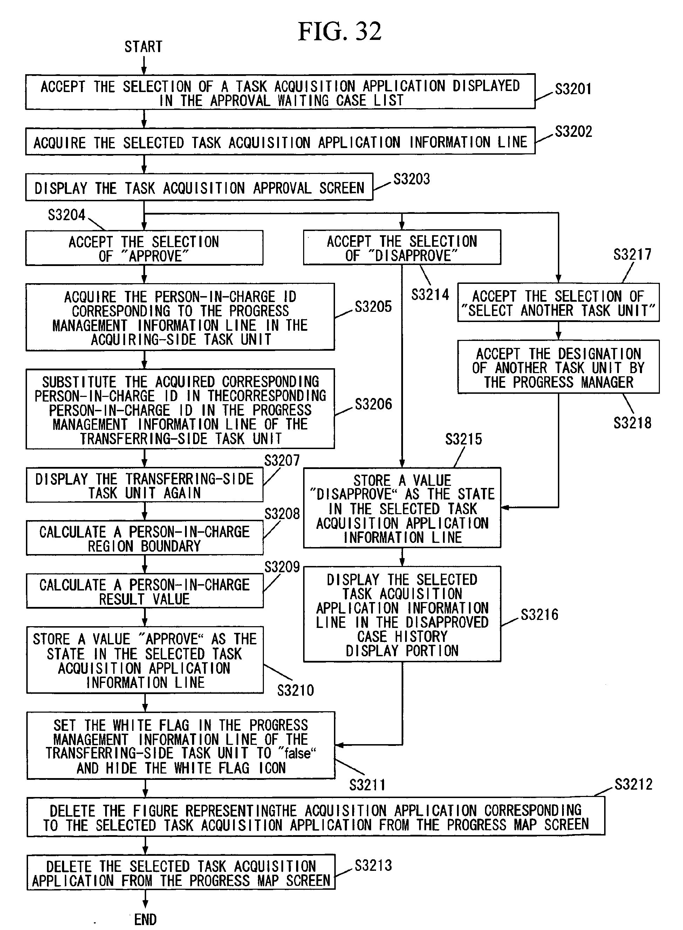

Fig. 32 shows a flowchart of an approval process with respect to a task acquisition application.

In this process, the manager's progress map operating program 126 accepts the selection of approval-waiting case information displayed in the approval waiting case list display portion (step 3201), and then acquires the task acquisition application information line corresponding to the selected approval-waiting case information (step 3202).

Based on the task acquisition application information line acquired at step 3202, the task acquisition approval screen is displayed (step 3203), and then the approval selection process is carried out as follows.

In the approval selection process, the selection of either "Approve," "Disapprove," or "Acquire another task unit" is accepted, depending on the progress manager's operation.

When the selection "Approve" is accepted (step 3204), a progress management information line corresponding to the acquiring-side task unit is acquired, and then the corresponding person-in-charge ID is extracted (step 3205).

The corresponding person-in-charge ID extracted at step 3205 is stored in the corresponding person-in-charge ID in the progress management information line corresponding to the transferring-side task unit (step 3206).

The transferring-side task unit is displayed again, and the person-in-charge name is changed (step 3207).

A person-in-charge region boundary setting process shown in the flowchart of Fig. 20 is carried out, and the person-in-charge region boundary line is reset and shown in the progress map display portion (step 3208).

A person-in-charge result value calculation process shown in the flowchart of Fig. 23 is carried out. The calculated person-in-charge result value is re-calculated and then shown in the person-in-charge list display portion (step 3209).

The value of "Approve" is stored in the state of the task acquisition application information line corresponding to the approval-waiting case information selected at step 3201 (step 3210).

The white flag in the progress management information line of the transferring-side task unit is set to "false," and the white-flag icon is hidden (step 3211).

The figure representing the acquisition application corresponding to the approval-waiting case information selected at step 3201 is deleted from the progress map (step 3212).

The approval-waiting case information selected at step 3201 is deleted from the approval waiting case list display portion, and then the process comes to an end (step 3213).

When the selection "Disapprove" is accepted (step 3214), the value of "Disapprove" is stored in the state of the task acquisition application information line corresponding to the selected approval-waiting case information (step 3215).

The information corresponding to the selected approval-waiting case information is displayed in the disapproved case history display portion (step 3216).

Thereafter, the white flag in the progress management information line of the transferring-side task unit is set to "false" and the white-flag icon is hidden, as in the case of the selection of "Approve" (step 3211).

The figure representing the acquisition application corresponding to the approval-waiting case information selected at step 3201 is deleted from the progress map (step 3212).

The approval-waiting case information selected at step 3201 is deleted from the approval waiting case list display portion, and then the process comes to an end (step 3213).

When the selection "Acquire another task unit" is accepted (step 3217), designation of a task unit subject to acquisition is accepted in accordance with the operation of the progress manager (step 3218).

Thereafter, the numerical value of "Disapprove" is stored in the state of the task acquisition application information line corresponding to the selected approval-waiting case information, as in the case where "Disapprove" is selected (step 3215).

The information corresponding to the approval-waiting case information selected at step 3201 is displayed in the disapproved case history display portion (step 3216).

The white flag in the progress management information line of the transferring-side task unit is set to "false," and the white-flag icon is hidden (step 3211).

The figure representing the acquisition application corresponding to the approval-waiting case information selected at step 3201 is deleted from the progress map (step 3212).

The approval-waiting case information selected at step 3201 is deleted from the approval waiting case list display portion, and the process comes to an end (step 3213).

In the process for "Acquire another task unit," an acquisition application for a task unit designated by the progress manager is also processed by the process shown in Fig. 32. In this case, because the applicant and the person granting approval are identical, normally "Approve" is selected. Therefore, if " Acquire another task unit" is selected, the same process as in the case of selection of "Approve" (steps 3205 to 3213) may be performed after another task unit is designated by the progress manager.

Hereafter, rearranging of a task unit on the progress map on the progress management screen will be described.

In accordance with the present embodiment, it is only allowed to transfer a task unit positioned on the person-in-charge region boundary. Meanwhile, the positioning of task units has nothing to do with the progress of tasks of each person in charge or the actual transfer request status. Thus, it may become necessary to rearrange the task units depending on the progress status or the like of a task.

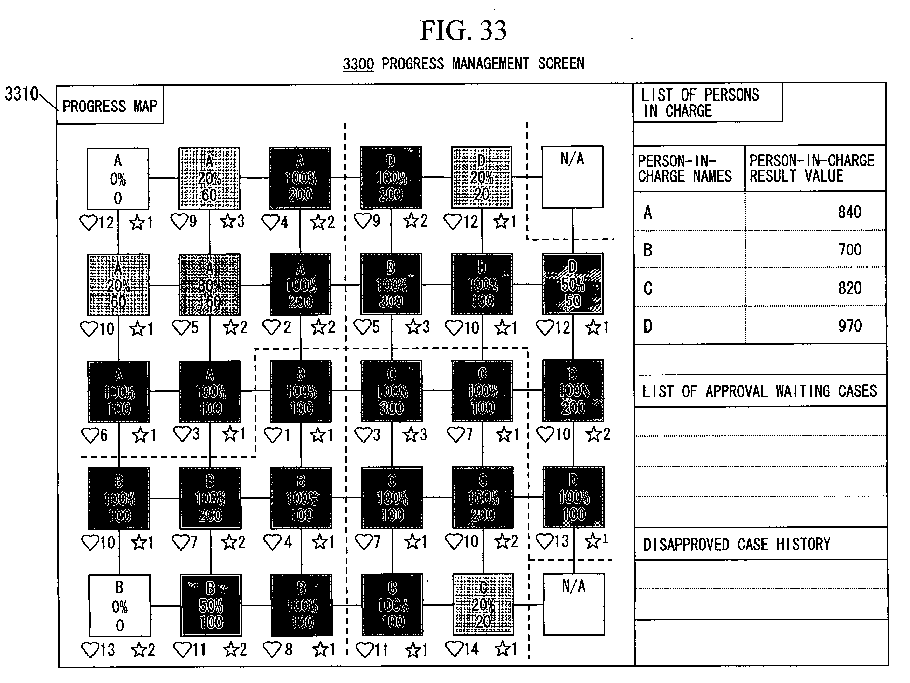

Fig. 33 shows a state in which the progress ratio of all of the task units positioned on the person-in-charge region boundary has reached 100%, which is a first rearranging condition.

As indicated in a progress map display portion 3310 on a progress management screen 3300 of Fig. 33, if the progress ratio of all of the task units positioned on the person-in-charge region boundary becomes 100%, no task can be transferred.

Thus, in accordance with the present embodiment, if the progress ratio of all of the task units positioned on the person-in-charge region boundary becomes 100%, the task units in the person-in-charge region are rearranged.

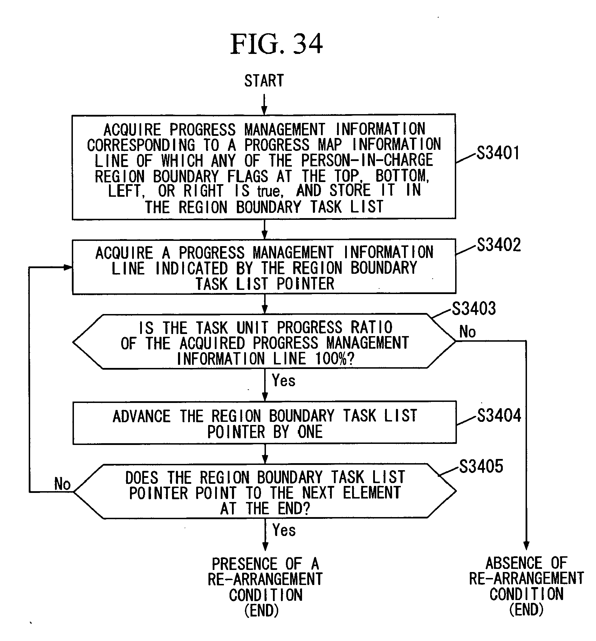

Fig. 34 shows a flowchart of a sequence of a task unit rearranging condition determination process for determining whether or not the progress ratio of all of the task units positioned on the person-in-charge region boundary is 100%.

In this process, the manager's progress map operating program 126 acquires all of the progress management information lines corresponding to progress map information lines of which the person-in-charge region boundary flag in any of the top, right, bottom, and left directions is "true," and stores them in a region-boundary task list in a list form (step 3401).

A progress management information line indicated by the list pointer in the region-boundary task list is acquired (step 3402). Then, it is determined whether or not the task unit progress ratio of the acquired progress management information line is 100% (step 3403).

If the ratio is determined to be less than 100%, no rearranging condition is recognized to be present, and the process comes to an end.

On the other hand, if the task unit progress ratio is determined to be 100%, the list pointer in the region-boundary task list is incremented by one (step 3404), and it is determined whether or not the list pointer of the region-boundary task list points to a next element at the end (step 3405).

If it is determined that the list pointer does not points to the next element at the end, the process for determining the task unit progress ratio is repeated.

If the next element at the end is being pointed to, the rearranging condition is recognized to have arisen, and a re-arranging process is carried out, as will be described later.

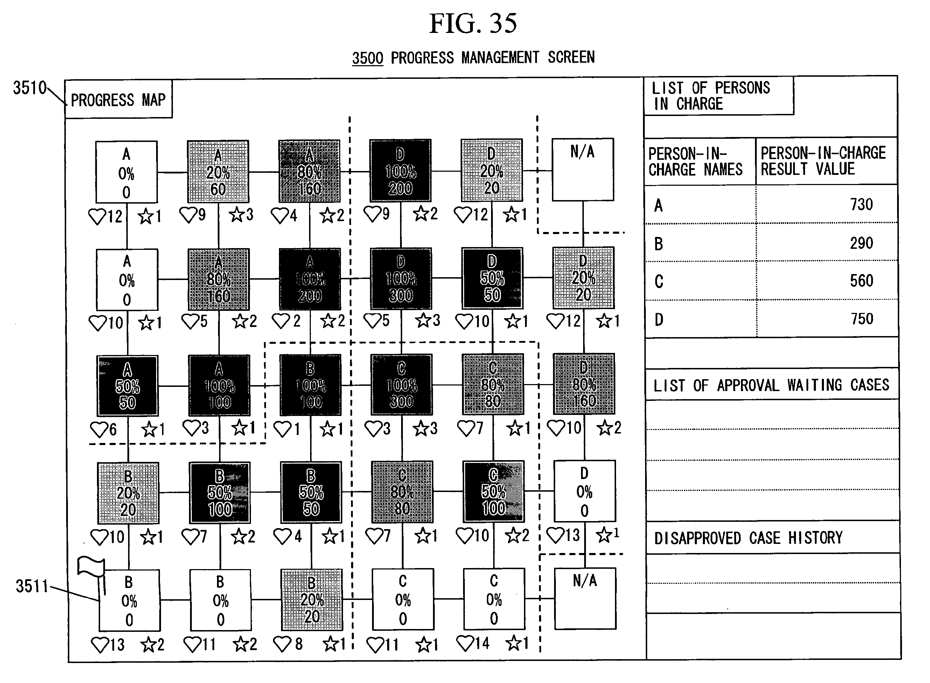

Fig. 35 shows a state in which, as a second rearranging condition, a transfer request has been issued for a task unit that is not positioned on the person-in-charge region boundary.

As shown in a progress map display portion 3510 on a progress management screen 3500 of Fig. 35, there may be cases where a person in charge requests the transfer of a task unit 3511 that is not positioned on the person-in-charge region boundary. In accordance with the present embodiment, however, transfer is allowed only for those task units that are arranged on the person-in-charge region boundary.

Thus, in accordance with the present embodiment, the rearrangement of the task units is carried out also when a transfer request is issued for a task unit that is not positioned on the person-in-charge region boundary.

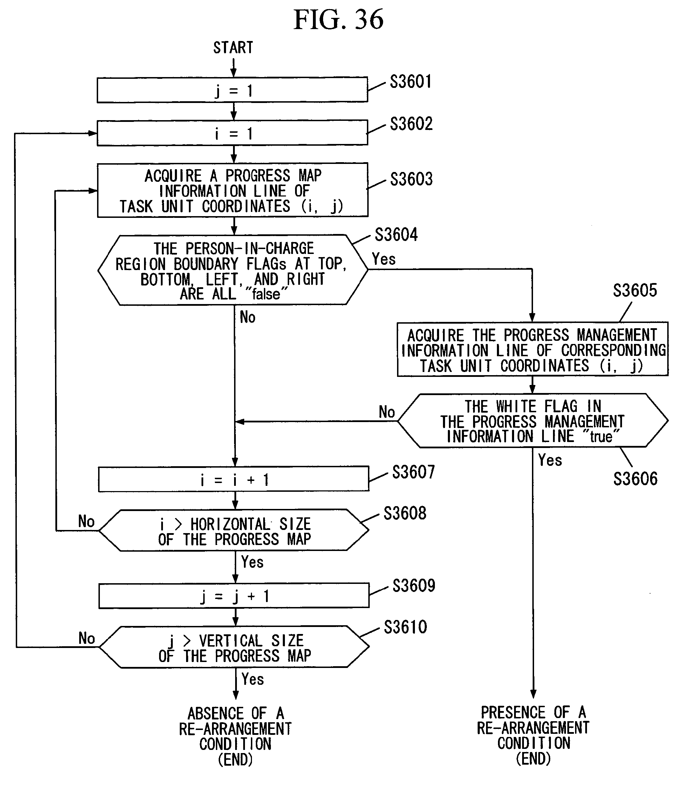

Fig. 36 shows a flowchart of the sequence of a process for determining whether or not a transfer request has been issued for a task unit that is not positioned on the person-in-charge region boundary, in a task unit rearranging condition determination process.

The manager's progress map operating program 126 first substitutes "1" for variable j (step 3601). Variable j represents a numerical value of the Y coordinate of the task unit coordinates.

Then, "1" is substituted for variable i (step 3602). Variable i represents a numerical value of the X coordinate of the task unit coordinates.

A progress map information line of which the task unit coordinates are (i, j) is acquired (step 3603).

Concerning the progress map information line acquired at step 3603, it is determined whether or not all of the person-in-charge region boundary flags in the top, right, bottom, and left directions are "false" (step 3604).

If the flags are all "false," a progress management information line of which associated task unit coordinates are (i, j) is acquired (step 3605).

It is determined whether or not the white flag in the progress management information line acquired at step 3605 is "true" (step 3606). If it is "true," the rearranging condition is recognized to have arisen, and a re-arranging process is conducted as will be described later.

On the other hand, if any of the person-in-charge region boundary flags was "true" at step 3604, or if the white flag was "false" at step 3606, the value of variable i is incremented by one (step 3607). It is then determined whether or not the value of variable i is greater than the progress map horizontal size (step 3608).

If variable i is not greater than the horizontal size, the transfer request determination process for a task unit that is not positioned on the person-in-charge region boundary is repeated (steps 3603 to 3607).

If variable i is greater than the horizontal size, the value of variable j is incremented by one (step 3609), and it is then determined whether or not the value of variable j is greater than the progress map vertical size (step 3610).

If it is determined that variable j is not greater than the vertical size, variable i is re-initialized (step 3602), and the transfer request determination process for the task unit that is not positioned on the person-in-charge region boundary is repeated (steps 3603 to 3607).

If variable j is greater than the vertical size, no rearranging condition is recognized to have arisen, and the process comes to an end.

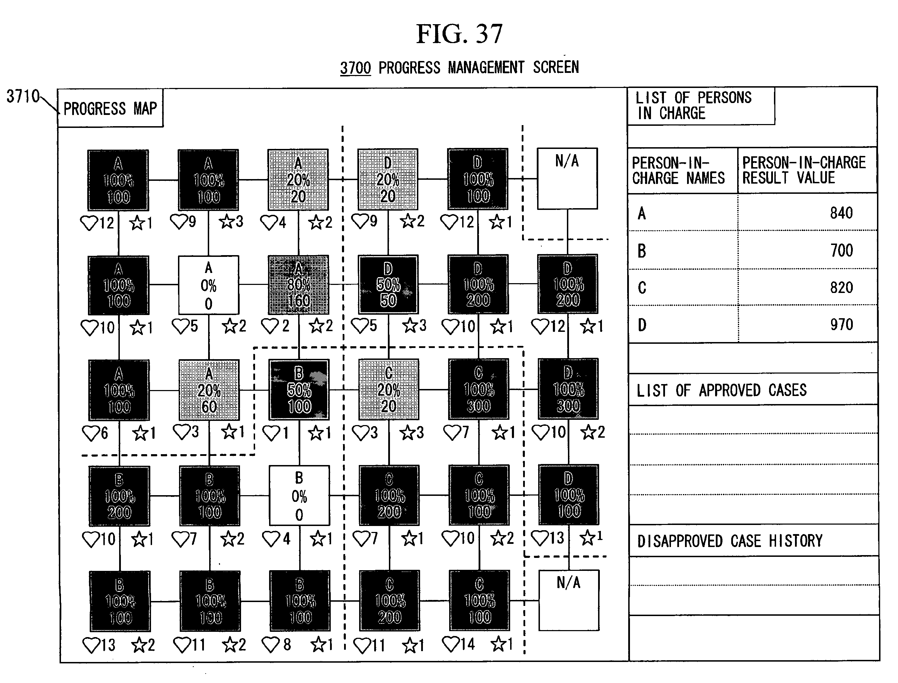

Fig. 37 shows a state in which the re-arranging process has been carried out for the task units in the progress map display portion shown in Fig. 33.

As shown in the figure, as a result of the re-arranging process, in a progress map display portion 3710 on a progress management screen 3700, task units with a progress ratio of less than 100% are arranged near the center of the progress map where the person-in-charge region boundary exists.

Thus, the transfer of task units is allowed in each person-in-charge region.

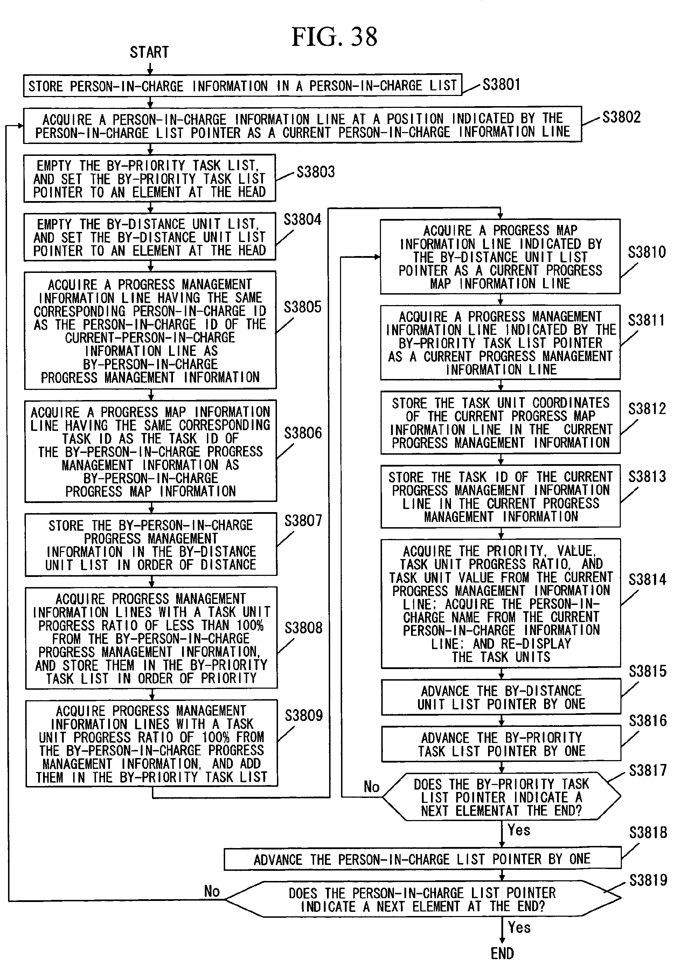

Fig. 38 shows a flowchart of a sequence of the task unit re-arranging process.

In this process, initially, the manager's progress map operation program 126 stores each line of the person-in-charge information 115 in the person-in-charge list of list form (step 3801).

A person-in-charge information line indicated by the list pointer of the person-in-charge list is acquired as a current person-in-charge information line (step 3802).

The by-priority task list in a list form is emptied of its elements and is set such that its list pointer points to an element at the head (step 3803).

The by-distance unit list in a list form is emptied of its elements and set such that its list pointer points to an element at the head (step 3804).

Based on person-in-charge ID of the current person-in-charge information line, all progress management information lines having the same person-in-charge ID are acquired as by-person-in-charge progress management information (step 3805).

Based on the task ID of each line of the by-person-in-charge progress management information acquired at step 3805, all progress map information lines having the same corresponding task ID are acquired as by-person-in-charge progress map information (step 3806).

The lines of the by-person-in-charge progress map information acquired at step 3806 are stored in the individual elements of the by-distance unit list in order of increasing distance (step 3807).

Progress management lines of which the task unit progress ratio is less than 100% are acquired from the by-person-in-charge progress management information lines, and the lines are stored in the individual elements of the by-priority task list in order of decreasing(or high) priority (i.e., in order of increasing value) (step 3808).

Thereafter, progress management lines of which the task unit progress ratio is 100% are acquired from the by-person-in-charge progress management information line, and the lines are added in the individual elements of the by-priority task list in order of decreasing(or high) priority (i.e., in order of increasing value) (step 3809).

A progress map information line indicated by the list pointer of the by-distance unit list is acquired as a current progress map information line (step 3810).

A progress management information line indicated by the list pointer of the by-priority task list is acquired as a current progress management information line (step 3811).

The task unit coordinates of the current progress map information line are stored in the corresponding task unit coordinates in the current progress management information line (step 3812).

The task ID of the current progress management information line is stored in the corresponding task ID in the current progress map information line (step 3813).

The task unit indicated by the task unit coordinates of the current progress map information line is re-displayed based on the priority, value, task unit progress ratio, and task unit value of the current progress management information line, and the person-in-charge name of the current person-in-charge information line (step 3814).

The list pointer of the by-distance unit list and that of the by-priority task list are each incremented by one (steps 3815 and 3816).

It is determined whether or not the list pointer of the by-priority task list points to a next element at the end (step 3817).

If it is determined that the pointer does not point to the next element at the end, the process for associating the progress map information with the progress management information is repeated (steps 3810 to 3816).

On the other hand, if the pointer points to the next element at the end, the list pointer of the person-in-charge list is incremented by one (step 3818), and then it is determined whether or not the list pointer of the person-in-charge list points to the next element at the end (step 3819).

If it is determined that the pointer does not point to the next element at the end, the task unit re-arranging process is carried out for the next person in charge (steps 3802 to 3816).

On the other hand, if the pointer points to the next element at the end, the re-arranging process comes to an end.

By the above process, the task units are rearranged as shown in Fig. 37.

While in the foregoing embodiment the value and priority for each task unit are indicated by numerical values on the progress map on the progress management screen, this is merely an example and other display methods may be employed.

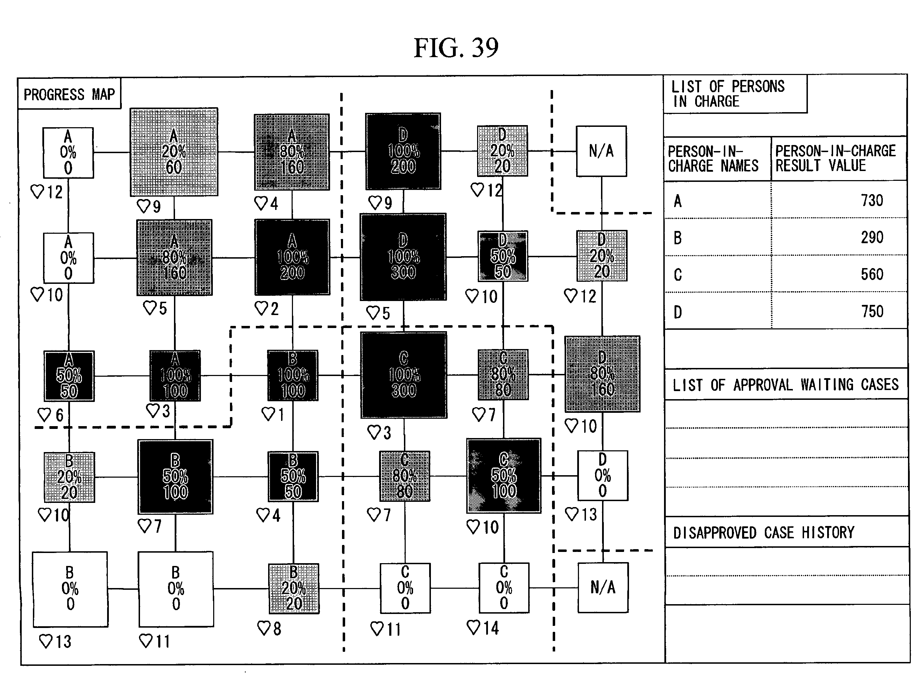

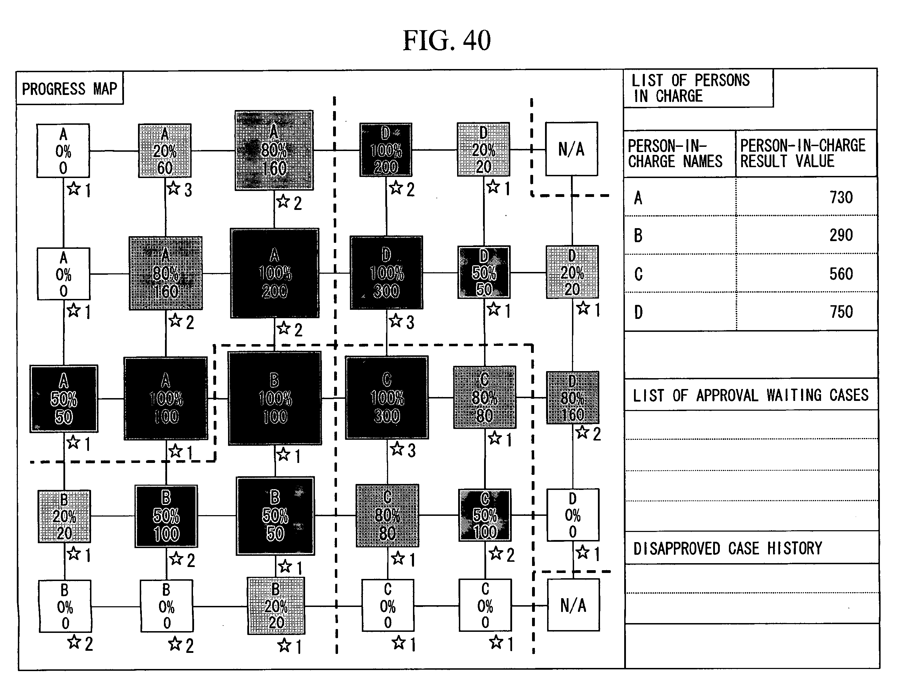

Fig. 39 shows an example in which the value of each task is represented by the area of the task unit. Fig. 40 shows an example in which the priority of each task is represented by the area of the task unit. In these examples shown in Figs. 39 and 40, the greater the value or the value of priority is, the larger the area of the task unit becomes.

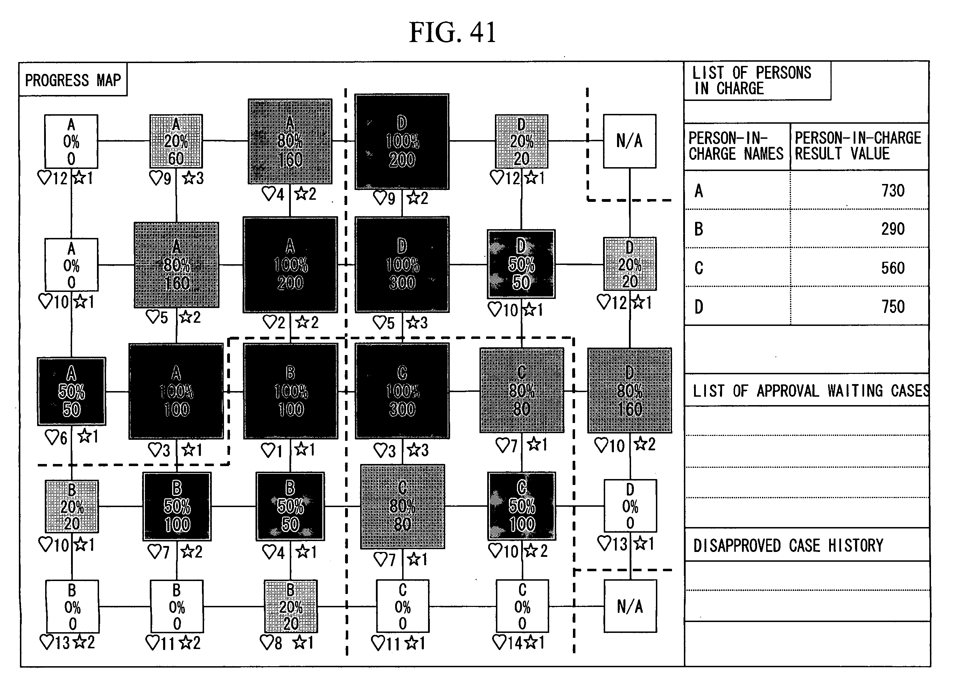

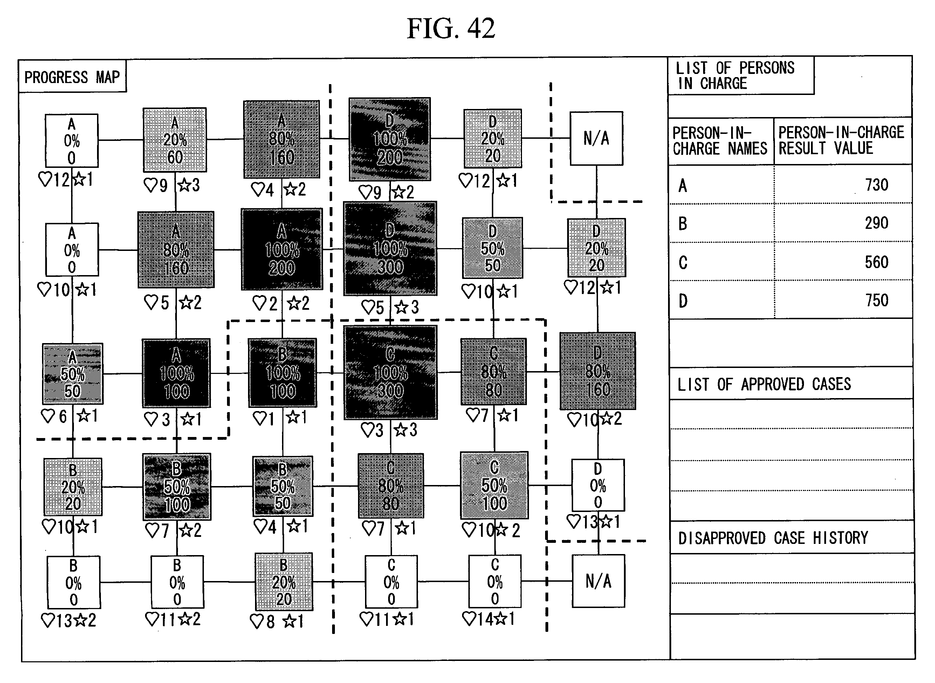

Similarly, the progress ratio of the task units represented in different shades may be represented by the area of the task unit, as shown in Fig. 41, for example. Further, the unit value may also be represented by the area of the task unit, as shown in Fig. 42, for example. In these cases shown in Figs. 41 and 42, the greater the value of the task unit progress ratio or the task unit value is, the larger the area of the task unit becomes.

By thus representing the value, priority, task unit progress ratio, task unit value, and the like by the area of the task unit, these items can be visually monitored.

While in the foregoing embodiment the progress management information is entered via the Gantt chart editing screen, screens in other formats may be used as an input screen as long as it is capable of handling data corresponding to the progress management information shown in Fig. 2. For example, the progress management information may be entered on an input screen of list format having input items including the task name, task start date, task end date, priority, value, and so on, corresponding to the data structure of the progress management information shown in Fig. 2.

While priority is determined in order of earlier task start dates during the calculation of priority, priority may be determined in accordance with a standard based on an attribute related to the task, such as the task end date or the difficulty of the task. In this case, the task attribute information is not limited to that described in the foregoing embodiment but it may include information indicating the type of the contents of the task, for example. Further, priority may be determined by the progress manager as he or she sees fit.

While in the foregoing embodiment the center of the progress map is used as a reference task unit, this is merely an example, and a task unit at any position on the progress map may be set as a reference task unit. It is also possible to set a plurality of task units as reference task units. For example, task units positioned at the four corners of the progress map may be set as reference task units, and association may be made in order of increasing priority. Alternatively, a provisional person-in-charge region boundary position may be set as desired on the progress map, and a plurality of task units positioned on the provisional person-in-charge region boundary may be set as reference task units.

While in the foregoing embodiment tasks are associated in accordance with the priority of each task, the association of the tasks may be changed by the progress manager as desired. Similarly, the progress map shown in Fig. 37 that has been rearranged may be rearranged.

While in the foregoing embodiment only the task of a task unit for which a transfer request is issued from a person in charge on the transferring side is allowed to be acquired, this is merely an example. The task of a task unit for which an acquisition request has been issued from a person in charge on the acquiring side may also be allowed to be transferred or acquired, provided that there is approval of both the transferring-side person in charge and the progress manager or the progress manager alone. In this way, one person in charge can acquire the result of another person in charge more easily, or the result of one person in charge can be more easily acquired by another person in charge. Thus, the progress manager can manage an operation while each person in charge is made aware of the progress and result of his or her own task.

While in the present embodiment the condition for rearranging the task units on the progress map corresponds to a case where the progress ratio of all of the task units positioned on the person-in-charge region boundary is 100%, or a case where a transfer request has been issued for a task unit that is not positioned on the person-in-charge region boundary, these are merely examples and other conditions may be set.

For example, from the viewpoint of the cost for progress management or optimization of the progress status of the overall operation, other conditions may be set, such as: "three transfers have been made concerning task units that are not positioned on the person-in-charge region boundary;" "the progress ratio of all of the task units positioned on the person-in-charge region boundary became 80% or greater;" or "the task unit progress ratio of all of the task units adjacent to a boundary with a person-in-charge region of a person in charge became 100%. Other conditions may be set arbitrarily by the progress manager.

Because the server device is not an indispensable feature of the progress management system of the present invention, the manager's client device may include the function of a server device. Further, the program feature of which the progress management means of the manager's client device is comprised is not limited to the relevant feature described with reference to the foregoing embodiment, but it may include a different program for each process flow.

## Claims

1. A progress management system comprising:
a plurality of person-in-charge's terminals; and
a manager's terminal connected to the person-in-charge's terminals via a network, wherein the manager's terminal, based on progress information about tasks received from the person-in-charge's terminals, generating and displaying progress management information about a project,
the manager's terminal comprising:
progress map generating means for generating, based on task attribute information that is arbitrarily entered about progress management of each task, progress management information, and associating the progress management information with each task unit, the progress map generating means also generating a progress map that shows the tasks in the form of a graph structural chart in which a task unit and adjacent task units are connected by a connection line;
person-in-charge assigning means for displaying person-in-charge identifying information, which identifies a person in charge who is arbitrarily assigned to each task unit on the progress map, on each task unit; and
progress information display means for receiving progress information that is registered in the person-in-charge's terminals for each task unit, and displaying the degree of progress of a task based on the progress information in association with each task unit on the progress map,
each person-in-charge's terminal includeing a progress map display means for receiving the progress map, on which the person-in-charge identifying information and the degree of progress of the task are shown, and displaying it on the person-in-charge's terminal.

2. The progress management system according to claim 1, wherein the manager's terminal further comprises:
person-in-charge region setting means for setting, based on the person-in-charge identifying information, a person-in-charge region boundary that divides regions including the task units assigned to the individual persons in charge, and displaying a region boundary line that represents the person-in-charge region boundary on the progress map.

3. The progress management system according to claim 1 or 2, wherein the person-in-charge's terminal further comprises progress information registration means for accepting the registration of progress information about a task unit that is assigned to each person in charge on the progress map.

4. The progress management system according to any one of claims 1 to 3, wherein the progress map generating means further comprises means for arranging the individual task units on the progress map in accordance with one or a plurality of reference positions that are arbitrarily designated in advance and based on priority set for each task unit.

5. The progress management system according to claim 4, wherein the progress map generating means further comprises means for setting the priority based on the task attribute information.

6. The progress management system according to any one of claims 1 to 5, wherein the progress map generating means further comprises means for displaying a task list input screen for accepting the entry of task attribute information for each task, and generating the progress management information based on the task attribute information entered on the task list input screen.

7. The progress management system according to claim 6, wherein the progress map generating means displays an input screen in the Gantt chart format as the task list input screen for accepting the setting of a planned task period for each task.

8. The progress management system according to any one of claims 1 to 7, wherein the task information includes value that is arbitrarily set for each task, and wherein the progress information display means further comprises means for calculating, for each task unit on the progress map, a result value for each task based on the degree of progress and the value, and displaying the result value on a corresponding task unit.

9. The progress management system according to any claims 1 to 8, wherein the progress information display means further comprises means for tallying the result value of each task of each person in charge to whom the task is assigned, and displaying the result of tallying.

10. The progress management system according to any one of claims 1 to 9, further comprising:
means for accepting a transfer setting from a person-in-charge's terminal of a person in charge indicated by person-in-charge identifying information set in a task unit on the progress map;
means for accepting an acquisition application from a person-in-charge's terminal of a person in charge indicated by the person-in-charge identifying information that is set in a task unit adjacent, across the person-in-charge region boundary, to a task unit that is set as a transfer object; and
means for accepting an acquisition approval setting from the manager's terminal in response to the acquisition application, changing the setting of the person in charge assigned to the task unit and the person-in-charge region boundary, and displaying the result of the change on the progress map.

11. The progress management system according to any one of claims 2 to 10, further comprising means for determining, concerning the task unit of each person in charge on the progress map, whether or not a predetermined arrangement change condition is met, and changing the arrangement of the task unit for each person-in-charge region if the arrangement change condition is met.

12. The progress management system according to any of claims 1 to 11, wherein each person-in-charge's terminal comprises means for setting referencing right for referencing task information about a task unit assigned to a person in charge other than the person in charge of the person-in-charge's terminal.

13. The progress management system according to any one of claims 1 to 12, wherein the progress information display means further comprises means for setting a display area of a task unit on the progress map in accordance with value, priority, progress degree, or task unit value.
